# EUROPEAN PATENT APPLICATION

(11) **EP 4 145 945 A1**
(43) Date of publication of application: **08.03.2023**
(21) Application number: 21807901.0
(22) Date of filing: 10.03.2021
(51) Int. Cl.: H04W 76/10

(54) **RELAY LINK ESTABLISHMENT, CONFIGURATION INFORMATION TRANSMISSION METHOD AND APPARATUS, AND READABLE STORAGE MEDIUM**

(30) Priority: 21.05.2020 CN 202010437468
(71) Applicant: Huawei Technologies Co., Ltd., Longgang District, Shenzhen, Guangdong 518129 (CN)
(72) Inventor: XING, Weijun, Shenzhen, Guangdong 518129 (CN); DING, Hui, Shenzhen, Guangdong 518129 (CN); ZHANG, Di, Shenzhen, Guangdong 518129 (CN); WU, Wenfu, Shenzhen, Guangdong 518129 (CN)
(74) Representative: Maiwald GmbH
(86) International application number: PCT/CN2021/080026
(87) International publication number: WO 2021/232897

(57) **Abstract**

A relay link establishment method, a configuration information sending method, an apparatus, and a readable storage medium are provided, to prevent a terminal device from establishing a relay link based on a relay apparatus when data of a target application is not allowed to be transmitted through the relay apparatus. In this application, the relay apparatus receives a first message from a first terminal device; and sends the first message when the relay apparatus determines that data of a target application is allowed to be transmitted through the relay apparatus. The relay apparatus stops sending the first message when the relay apparatus determines that the data of the target application is not allowed to be transmitted through the relay apparatus. The first message includes relay service indication information, and the relay service indication information is used to indicate the first terminal device to request to establish a relay link. The relay apparatus stops sending the first message when the data of the target application is not allowed to be transmitted through the relay apparatus. Consequently, a second terminal device cannot receive the first message from the relay apparatus, and further cannot establish a relay link based on the relay apparatus.

## Description

### CROSS-REFERENCE TO RELATED APPLICATIONS

This application claims priority to Chinese Patent Application No. 202010437468.2, filed with the China National Intellectual Property Administration on May 21, 2020 and entitled "RELAY LINK ESTABLISHMENT METHOD, CONFIGURATION INFORMATION SENDING METHOD, APPARATUS, AND READABLE STORAGE MEDIUM", which is incorporated herein by reference in its entirety.

### TECHNICAL FIELD

This application relates to the communication field, and in particular, to a relay link establishment method, a configuration information sending method, an apparatus, and a readable storage medium.

### BACKGROUND

To improve wireless spectrum utilization and provide a cellular network service for a terminal device without cellular network coverage, proximity-based services (Proximity-based Services, ProSe) communication is introduced into a cellular communication network. In the ProSe communication, a communication link may not be established between two adjacent terminal devices based on a base station, and data may not be transmitted between the two terminal devices through the base station.

In the ProSe communication, a connection may be directly established between two terminal devices based on a PC5 interface. Alternatively, two terminal devices may be connected to each other through a relay apparatus. In this case, the two terminal devices need to be separately connected to the relay apparatus through a PC5 interface.

Relay apparatuses are usually provided by some vendors, and costs are also required for deploying the relay apparatuses by these vendors. Therefore, the vendors prefer that the relay apparatuses deployed by the vendors serve only some specific target applications. However, in a conventional technology, after a link is established between two terminal devices through a relay apparatus, all data between the two terminal devices may be transmitted through the relay apparatus.

### SUMMARY

This application provides a relay link establishment method, a configuration information sending method, an apparatus, and a readable storage medium, to prevent a first terminal device and a second terminal device from transmitting data of a target application through a relay apparatus when the data of the target application is not allowed to be transmitted through the relay apparatus.

According to a first aspect, in this application, a relay apparatus receives a first message from a first terminal device, where the first message includes first indication information and relay service indication information, the first indication information is used to indicate an identifier of a target application, and the relay service indication information is used to indicate the first terminal device to request to establish a relay link. The relay apparatus sends the first message when the relay apparatus determines that data of the target application is allowed to be transmitted through the relay apparatus. The relay apparatus stops sending the first message when the relay apparatus determines that the data of the target application is not allowed to be transmitted through the relay apparatus. The relay apparatus stops sending the first message when the relay apparatus determines that the data of the target application is not allowed to be transmitted through the relay apparatus. Consequently, a second terminal device cannot receive the first message from the relay apparatus, and the second terminal device may receive the first message only from the first terminal device. In this case, the second terminal device directly establishes a link to the first terminal device, and stops establishing the link based on the relay apparatus. In this way, the data of the target application that needs to be transmitted between the first terminal device and the second terminal device is no longer transmitted through the relay apparatus, but is transmitted based on the link directly established between the first terminal device and the second terminal device.

In a possible implementation, when the identifier of the target application matches an identifier of a first application, the relay apparatus allows the data of the target application to be transmitted through the relay apparatus. In this way, whether the data of the target application is allowed to be transmitted through the relay apparatus may be determined based on the identifier of the target application.

In a possible implementation, before that a relay apparatus receives a first message from a first terminal device, the method further includes: The relay apparatus receives configuration information of the relay apparatus from a network device, where the configuration information of the relay apparatus includes an identifier of at least one application, and the relay apparatus allows data of each of the at least one application to be transmitted through the relay apparatus; and the identifier of the first application mentioned in the foregoing content is one of the identifier of the at least one application. In this way, the network device may configure an application that can use a relay service of the relay apparatus.

In a possible implementation, the first indication information is further used to indicate an identifier of a target user, and the target user is a user of the target application of the first terminal device. When the identifier of the target application matches an identifier of a first application, and the identifier of the target user matches an identifier of a first user, the relay apparatus allows the data of the target application to be transmitted through the relay apparatus. In this way, user level granularity division may be performed, so that the relay apparatus provides relay services for specified users in some specified applications.

In a possible implementation, before that a relay apparatus receives a first message from a first terminal device, the method further includes: The relay apparatus receives configuration information of the relay apparatus from a network device, where the configuration information of the relay apparatus includes an identifier of at least one application and an identifier of a user corresponding to an identifier of each application in the identifier of the at least one application; the identifier of the first application mentioned in the foregoing content is one of the identifier of the at least one application, and the first user is one of an identifier of a user corresponding to the identifier of the first application; and for each of the at least one application, the relay apparatus allows data of each user corresponding to the application to be transmitted through the relay apparatus. In this way, the network device may configure an application and a user that can use a relay service of the relay apparatus.

In a possible implementation, the first indication information includes a target relay service code. When the target relay service code matches a first relay service code, the relay apparatus allows the data of the target application to be transmitted through the relay apparatus. In this way, whether to provide a relay service may be determined by using only a relay service code, so that leakage of the identifier of the target application can be avoided, and privacy can be further protected.

In a possible implementation, before that a relay apparatus receives a first message from a first terminal device, the method further includes: The relay apparatus receives configuration information of the relay apparatus from a network device, where the configuration information of the relay apparatus includes at least one relay service code; each of the at least one relay service code corresponds to an identifier of at least one application; the relay apparatus allows data of each of the at least one application corresponding to each of the at least one relay service code to be transmitted through the relay apparatus; and the first relay service code mentioned in the foregoing content is one of the at least one relay service code. In this way, the network device may configure an application and a user that can use a relay service of the relay apparatus.

In a possible implementation, for an identifier of each application in the identifier of the at least one application corresponding to each of the at least one relay service code in the configuration information of the relay apparatus, the identifier of the application corresponds to an identifier of at least one user, and the relay apparatus allows data of each user in the identifier of the at least one user corresponding to the application to be transmitted through the relay apparatus. In this way, whether to provide a relay service may be determined by using only a relay service code, so that leakage of the identifier of the target application and the identifier of the target user can be avoided, and privacy can be further protected.

In a possible implementation, after that a relay apparatus receives a first message from a first terminal device, the method further includes: The relay apparatus sends a first request to a network device, where the first request includes the identifier of the target application and an identifier of the relay apparatus; and the first request is used to request to verify whether the relay apparatus is allowed to transmit the data of the target application. The relay apparatus receives a first response returned by the network device. In a possible case, the first response is used to indicate that the relay apparatus is allowed to transmit the data of the target application. Alternatively, in another possible case, the first response is used to indicate that the relay apparatus is not allowed to transmit the data of the target application. In this way, the relay apparatus may verify, from a network side, whether to provide a relay service for the target application.

In a possible implementation, the first request further includes an identifier of a target user, and the target user is a user of the target application of the first terminal device; and the first request is used to request to verify whether the relay apparatus is allowed to transmit data of the target application corresponding to the target user. In a possible case, the first response is used to indicate that the relay apparatus is allowed to transmit the data of the target application corresponding to the target user. Alternatively, in another possible case, the first response is used to indicate that the relay apparatus is not allowed to transmit the data of the target application corresponding to the target user. In this way, the relay apparatus may verify, from a network side, whether to provide a relay service for the target user of the target application.

According to a second aspect, this application provides a relay link establishment method. In the method, a first apparatus generates a first message; and sends the first message, where the first message includes first indication information and relay service indication information, the first indication information is used to indicate an identifier of a target application, and the relay service indication information is used to indicate to request to establish a relay link. In this way, the relay apparatus may determine, based on the first indication information, whether to provide a relay service for a proximity-based services connection that is requested this time.

In a possible implementation, the first indication information includes a target relay service code. In this way, whether to provide a relay service may be determined by using only a relay service code, so that leakage of the identifier of the target application can be avoided, and privacy can be further protected.

In a possible implementation, before that a first apparatus generates a first message, the method further includes: The first apparatus receives configuration information of a target user from a network device, where the configuration information of the target user includes at least one relay service code and an identifier of at least one application corresponding to each of the at least one relay service code; and the target relay service code is a relay service code corresponding to the identifier of the target application in the configuration information of the target user. In this way, a basis may be laid for the relay apparatus to determine, based on the target relay service code, whether to provide a relay service for a proximity-based services connection that is requested this time.

In a possible implementation, the configuration information of the target user includes at least one relay service code corresponding to the target user and an identifier of at least one application corresponding to each of the at least one relay service code; and the target user is a user of the target application of the first terminal device. In this way, the relay apparatus may determine, by using only a relay service code, whether to provide a relay service, so that leakage of the identifier of the target application and the identifier of the target user can be avoided, and privacy can be further protected.

According to a third aspect, this application provides a configuration information sending method. The method includes: A network device generates configuration information of a relay apparatus according to a preset first rule; and the network device sends the configuration information of the relay apparatus to the relay apparatus, where the configuration information of the relay apparatus includes indication information used to indicate an identifier of at least one application; and the relay apparatus allows data of each of the at least one application to be transmitted through the relay apparatus. In this way, the relay apparatus may determine, based on the configuration information of the relay apparatus, whether to provide a relay service for a proximity-based services connection that is requested this time.

In a possible implementation, the configuration information of the relay apparatus includes the identifier of the at least one application. In this way, the relay apparatus may determine, based on an identifier of a target application indicated by first indication information and the configuration information of the relay apparatus, whether to provide a relay service for a proximity-based services connection that is requested this time.

In a possible implementation, the configuration information of the relay apparatus includes the identifier of the at least one application and an identifier of a user corresponding to an identifier of each application in the identifier of the at least one application; and for each of the at least one application, the relay apparatus allows data of each user corresponding to the application to be transmitted through the relay apparatus. In this way, whether data of a target application is allowed to be transmitted through the relay apparatus may be determined based on an identifier of the target application and the configuration information of the relay apparatus.

In a possible implementation, the configuration information of the relay apparatus includes at least one relay service code; and for the identifier of the at least one application corresponding to each of the at least one relay service code, the relay apparatus allows data of each of the at least one application to be transmitted through the relay apparatus. In this way, whether to provide a relay service may be determined by using only a relay service code, so that leakage of the identifier of the target application can be avoided, and privacy can be further protected.

In a possible implementation, for an identifier of each application in the identifier of the at least one application corresponding to each of the at least one relay service code, the identifier of the application corresponds to an identifier of at least one user, and the relay apparatus allows data of each user in the identifier of the at least one user corresponding to the application to be transmitted through the relay apparatus. In this way, whether to provide a relay service may be determined by using only a relay service code, so that leakage of the identifier of the target application and an identifier of a target user can be avoided, and privacy can be further protected.

In a possible implementation, the method further includes: The network device generates configuration information of a target user according to a preset second rule; and the network device sends the configuration information of the target user to the first terminal device, where the target user is a user of the target application of the first terminal device; and the configuration information of the target user includes at least one relay service code corresponding to the target user and an identifier of each application in the identifier of the at least one application corresponding to each of the at least one relay service code, and the identifier of the application corresponds to an identifier of at least one user. In this way, whether to provide a relay service may be determined by using only a relay service code, so that leakage of the identifier of the target application can be avoided, and privacy can be further protected.

According to a fourth aspect, this application provides a relay link establishment method. The method includes: A first apparatus receives configuration information of a target user, where the configuration information of the target user is used to indicate an identifier of at least one application. The first apparatus includes relay service indication information in a first message when a target application matches one of the at least one application; and/or includes no relay service indication information in the first message when the target application does not match any of the at least one application, where the relay service indication information is used to indicate the first terminal to request to establish a relay link based on a relay apparatus. The first apparatus sends the first message, where the first message is used to request to establish a proximity-based services link to a second terminal device. When the first message does not carry the relay service indication information used to indicate the first terminal to request to establish the relay link based on the relay apparatus, the relay apparatus does not forward the first message after receiving the first message. Correspondingly, the second terminal device cannot receive the first message from the relay apparatus, and further does not use the relay apparatus when establishing the proximity-based services link to the first terminal device.

In a possible implementation, after that the first apparatus sends the first message, the method further includes: The first apparatus establishes the proximity-based services link to the second terminal device through the relay apparatus. The first apparatus reports a second message to a network device, where the second message carries an identifier of the target application, and the second message is used to enable the network device to verify whether the relay apparatus is allowed to transmit data of the target application corresponding to the target user. In this way, secondary verification may be performed on whether the relay apparatus can provide a relay service for the proximity-based services link.

According to a fifth aspect, this application provides a configuration information sending method. The method includes: A network device generates configuration information of a target user according to a preset second rule. The network device sends the configuration information of the target user to a first terminal device, where the target user is a user of a target application of the first terminal device; the configuration information of the target user includes an identifier of at least one application; and data of the target user of each of the at least one application is allowed to be transmitted through a relay apparatus. In this way, the first terminal device can determine specific applications whose data can be transmitted through the relay apparatus.

Corresponding to any communication method in the first aspect to the fifth aspect, this application further provides a communication apparatus. The communication apparatus may be any transmit end device or receive end device that performs data transmission in a wireless manner. For example, the communication apparatus may be a communication chip, a terminal device, or a network device (for example, a base station). In a communication process, a transmit end device and a receive end device are opposite to each other. In some communication processes, the communication apparatus may be used as the foregoing network device or a communication chip that may be used in the network device. In some communication processes, the communication apparatus may be used as the foregoing terminal device or a communication chip that may be used in the terminal device.

According to a sixth aspect, a communication apparatus is provided. The communication apparatus includes a communication unit and a processing unit, to perform any implementation of any communication method according to the first aspect to the fifth aspect. The communication unit is configured to perform functions related to sending and receiving. Optionally, the communication unit includes a receiving unit and a sending unit. In a design, the communication apparatus is a communication chip, and the communication unit may be an input/output circuit or a port of the communication chip.

In another design, the communication unit may be a transmitter and a receiver, or the communication unit may be a transmitter machine and a receiver machine.

Optionally, the communication apparatus further includes modules that may be configured to perform any implementation of any communication method according to the first aspect to the fifth aspect.

According to a seventh aspect, a communication apparatus is provided. The communication apparatus is the foregoing first apparatus, the foregoing terminal device (for example, the first terminal device or the second terminal device), the foregoing relay apparatus, or the foregoing network device. The first apparatus may be a terminal device. For example, the first apparatus may be a first terminal device. Alternatively, the relay apparatus may be a terminal device, or may be a network device. This is not specifically limited. The communication apparatus may include a processor and a memory. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is enabled to perform any implementation of any communication method according to the first aspect to the fifth aspect.

Optionally, there are one or more processors, and there are one or more memories.

Optionally, the memory may be integrated with the processor, or the memory and the processor are separately disposed.

Optionally, the transceiver may include a transmitter machine (transmitter) and a receiver machine (receiver).

According to an eighth aspect, a communication apparatus is provided. The communication apparatus includes a processor. The processor is coupled to a memory, and may be configured to perform the method according to any one of the first aspect to the fifth aspect, and any one of the possible implementations of the first aspect to the fifth aspect. Optionally, the communication apparatus further includes the memory. Optionally, the communication apparatus further includes a communication interface, and the processor is coupled to the communication interface.

In an implementation, the communication apparatus is a terminal device (for example, a first apparatus, a first terminal device, a second terminal device, or a relay apparatus). When the communication apparatus is the terminal device, the communication interface may be a transceiver or an input/output interface. Optionally, the transceiver may be a transceiver circuit. Optionally, the input/output interface may be an input/output circuit.

In another implementation, the communication apparatus is a network device (for example, a relay apparatus or a network device). When the communication apparatus is the network device, the communication interface may be a transceiver or an input/output interface. Optionally, the transceiver may be a transceiver circuit. Optionally, the input/output interface may be an input/output circuit.

In still another implementation, the communication apparatus is a chip or a chip system. When the communication apparatus is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a ninth aspect, a system is provided. The system includes the foregoing terminal device, the foregoing relay apparatus, and the foregoing network device.

According to a tenth aspect, a computer program product is provided. The computer program product includes a computer program (which may also be referred to as code or instructions). When the computer program is run, a computer is enabled to perform the method according to any possible implementation of the first aspect, or the computer is enabled to perform the method according to any implementation of the first aspect to the fifth aspect.

According to an eleventh aspect, a computer-readable storage medium is provided. The computer-readable medium stores a computer program (which may also be referred to as code or instructions). When the computer program is run on a computer, the computer is enabled to perform the method according to any possible implementation of the first aspect, or the computer is enabled to perform the method according to any implementation of the first aspect to the fifth aspect.

According to a twelfth aspect, a processing apparatus is provided. The processing apparatus includes an input circuit, an output circuit, and a processing circuit. The processing circuit is configured to: receive a signal through the input circuit, and transmit a signal through the output circuit, so that the method according to any one of the first aspect to the fifth aspect and the possible implementations of the first aspect to the fifth aspect is implemented.

In a specific implementation process, the foregoing processing apparatus may be a chip, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

### BRIEF DESCRIPTION OF DRAWINGS

FIG. 1a is a schematic architectural diagram of a ProSe communication system according to an embodiment of this application;
FIG. 1b is a schematic architectural diagram of a possible proximity-based services communication system in a 5G architecture according to an embodiment of this application;
FIG. 1c is a schematic diagram of a structure of a proximity-based services link according to an embodiment of this application;
FIG. 1d is a schematic diagram of a structure of a proximity-based services link according to an embodiment of this application;
FIG. 1e is a schematic flowchart of a proximity-based services link establishment method according to an embodiment of this application;
FIG. 1f is a schematic flowchart of a proximity-based services link establishment method according to an embodiment of this application;
FIG. 2a-1 and FIG. 2a-2 are a schematic flowchart of a relay link establishment method according to an embodiment of this application;
FIG. 2b-1 and FIG. 2b-2 are a schematic flowchart of a relay link establishment method according to an embodiment of this application;
FIG. 3a is a schematic flowchart of a configuration information generation method according to an embodiment of this application;
FIG. 3b is a schematic flowchart of a configuration information generation method according to an embodiment of this application;
FIG. 3c is a schematic flowchart of a configuration information generation method according to an embodiment of this application;
FIG. 4a shows a communication parameter configuration process and a discovery parameter configuration process according to an embodiment of this application;
FIG. 4b shows a policy information obtaining process according to an embodiment of this application;
FIG. 5 is a schematic diagram of a structure of a communication apparatus according to an embodiment of this application;
FIG. 6 is a schematic diagram of a structure of a communication apparatus according to an embodiment of this application; and
FIG. 7 is a schematic diagram of a structure of a communication apparatus according to an embodiment of this application.

### DESCRIPTION OF EMBODIMENTS

Embodiments of this application are applicable to proximity-based services communication. The proximity-based services communication means that a communication link may not be established between two adjacent terminal devices based on a base station, and data may not be transmitted between the two terminal devices through the base station. The communication link may be directly established between the two terminal devices, or the communication link may be established based on a relay device. When the communication link is established based on the relay device, the link may also be referred to as a relay connection. The proximity-based services communication in embodiments of this application may be proximity-based services (Proximity-based Services, ProSe) communication, or certainly may have another name. In the following content, for ease of description, a ProSe is used as an example for description. In embodiments of this application, the proximity-based services communication may also be written as a proximity-based service, a ProSe, or the like.

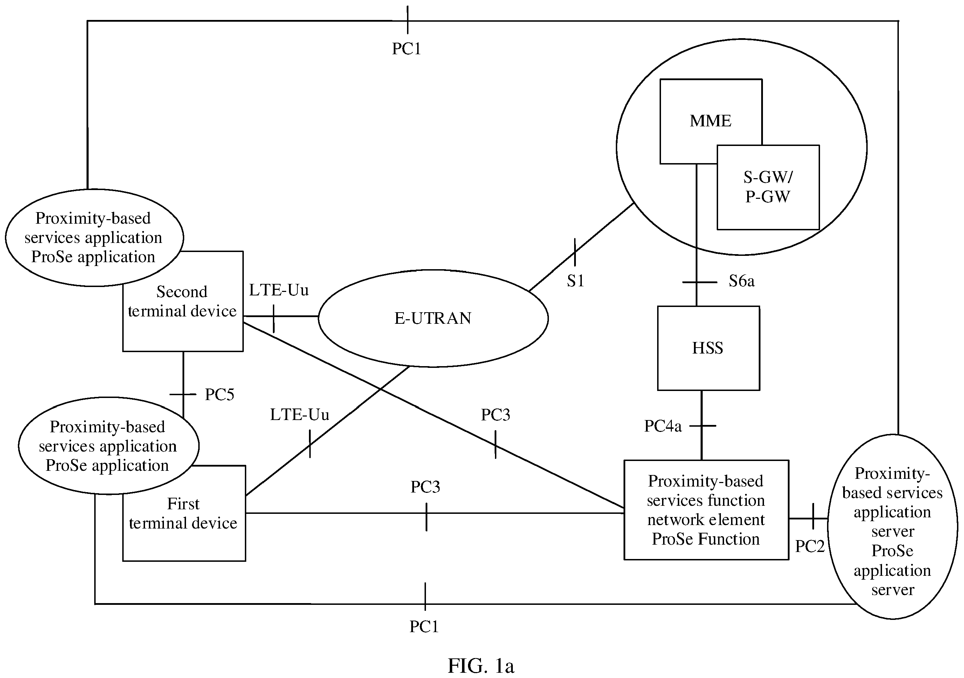

FIG. 1a is a schematic architectural diagram of a ProSe communication system according to an embodiment of this application. The schematic architectural diagram shows a ProSe communication architecture formulated by the 3rd Generation Partnership Project (3rd Generation Partnership Project, 3GPP) organization based on a 4th generation mobile network (4^{th} generation, 4G) communication architecture. Various devices or network elements in embodiments of this application are described based on FIG. 1a.
1. A terminal device: The terminal device may include various handheld devices, vehicle-mounted devices, wearable devices, computing devices that have a wireless communication function, or other processing devices connected to a wireless modem, and terminals in various forms, for example, a mobile station (mobile station, MS), a terminal (terminal), user equipment (user equipment, UE), and a soft client.

The terminal device may support ProSe communication or another service. The terminal device can receive or send a message through a PC5 interface or a Uu interface. When the terminal device is connected to a network through a relay apparatus, the terminal device may also be referred to as a remote terminal device (Remote UE). FIG. 1a is an example of two terminal devices: a first terminal device and a second terminal device. When the first terminal device and the second terminal device perform proximity-based services communication, the two terminal devices may be understood as proximity-based services applications (ProSe applications). When the first terminal device and the second terminal device may perform proximity-based services communication, the first terminal device and the second terminal device may communicate with each other based on a PC5 interface. In this case, data transmitted between the first terminal device and the second terminal device does not need to be transmitted through a base station (for example, an evolved universal mobile telecommunications system terrestrial radio access network (Evolved Universal Mobile Telecommunications System Terrestrial Radio Access Network, E-UTRAN) shown in FIG. 1a).

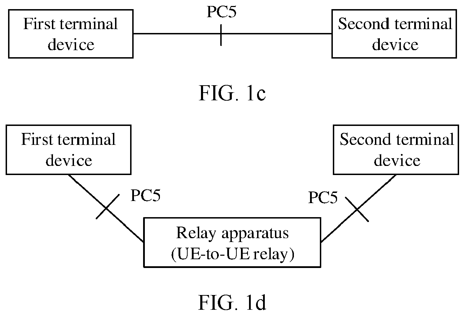

A link may be established between the two terminal devices based on the relay apparatus. That is, the two terminal devices may be separately connected to an intermediate apparatus. In another possible implementation, a link may be directly established between the two terminal devices, and the link between the two terminal devices does not include the relay apparatus. For the two structures, refer to the following detailed descriptions of FIG. 1c and FIG. 1d. Details are not described herein.

2. Relay apparatus: The relay apparatus is not shown in FIG. 1a, and the relay apparatus may be written as a relay in English. The relay apparatus may be a terminal device, or may be a wireless access device (for example, an access device that is similar to a router and that is deployed by an operator). A location of the relay apparatus may be fixed. For example, the relay apparatus may be a router with a fixed location. Alternatively, the location of the relay apparatus is movable. For example, the relay apparatus is a mobile phone that can be flexibly moved.

3. Proximity-based services function network element (ProSe function): A proximity-based services function module may allocate some parameters (for example, a discovery parameter to be mentioned in subsequent content) to the first terminal device and the second terminal device, to help establish a proximity-based services link between the first terminal device and the second terminal device. As shown in FIG. 1a, the system architecture may further include a proximity-based services application server (ProSe application server), which may be configured to verify information such as permission and an identity of UE that requests to establish ProSe communication.

4. An access network device: The access network device may be responsible for functions such as radio resource management, uplink and downlink data classification, quality of service (quality of service, QoS) application, completing signaling processing with a control plane network element, and completing data forwarding with a user plane function network element. For example, the access network device may be a base station, a broadband network gateway (broadband network gateway, BNG), an aggregation switch, a non-3 GPP access device, or the like. The base station may include various types of base stations, for example, a macro base station, a micro base station (also referred to as a small cell), a relay station, and an access point. This is not specifically limited in embodiments of this application. A device through which the terminal device accesses a core network may be uniformly referred to as the access network device in embodiments of this application. Details are not described herein. For example, the access network device may be an evolved universal terrestrial radio access network (evolved universal terrestrial radio access network, E-UTRAN) device in a 4G network, a next generation radio access network (next generation radio access network, NG-RAN) device in a 5G network, or the like.

As shown in FIG. 1a, the system architecture may further include a home subscriber server (Home Subscriber Server, HSS) network element, a mobility management module (Mobility Management Entity, MME) network element, a serving gateway (Serving Gateway, S-GW) network element, and a packet data network gateway (Packet Data Network Gateway, P-GW) network element. The HSS may be configured to manage subscription information of a user, and is similar to a UDM. The MME may be configured to perform mobility management, access control, and the like on the user. The S-GW may be used as a gateway terminated at an E-UTRAN interface, and used for uplink and downlink transport layer packet marking, mobility anchoring, charging, and the like. The P-GW may be used as a gateway oriented to a PDN and terminated at an SGi interface, and used for a user-based packet filtering function, a lawful interception function, an IP address allocation function of UE, and the like. The UE may communicate with the E-UTRAN through a long term evolution (Long Term Evolution, LTE)-Uu interface, the proximity-based services function network element may communicate with the UE based on a PC3 interface, and the proximity-based services function network element may communicate with the proximity-based services application server based on a PC2 interface. The proximity-based services function network element may communicate with the HSS based on a PC4a interface, the HSS may communicate with the MME, the S-GW, or the P-GW based on an S6a interface, and the E-UTRAN may communicate with the MME, the S-GW, or the P-GW based on an S1 interface.

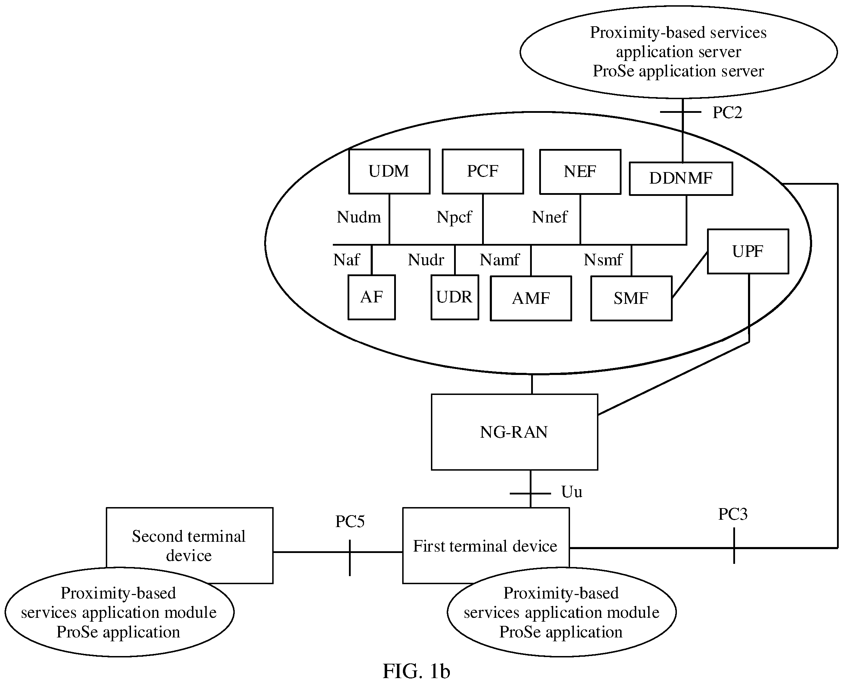

As the 3GPP organization formulates the 5th generation mobile network (5^{th} generation, 5G) standard of the Release 17 (Release 17, R17), ProSe is also studied and discussed as an important topic. FIG. 1b is an example of a schematic architectural diagram of a possible proximity-based services communication system in a 5G architecture according to an embodiment of this application. The following describes various devices or network elements in FIG. 1b.
1. Terminal device: As shown in FIG. 1b, for related descriptions of the terminal device in the communication system, refer to the descriptions of the terminal device in FIG. 1a. In addition, in FIG. 1b, an example in which a first terminal device and a second terminal device are two terminal devices is still used for description.
2. Proximity-based services application server (ProSe application server): The proximity-based services application server may be configured to verify information such as permission and an identity of UE that requests to establish ProSe communication.
3. 5G NG-RAN network element: The 5G NG-RAN network element is configured to provide a network access function for authorized terminal devices in a specific area, and can use transmission tunnels with different quality based on levels of the terminal devices, service requirements, and the like. The NG-RAN network element can manage radio resources and provide an access service for the terminal device, to forward a control signal and terminal device data between the terminal device and a core network. The NG-RAN may also be understood as a base station in a conventional network.
4. User plane network element: The user plane network element is configured to perform packet routing and forwarding, quality of service (quality of service, QoS) processing on user plane data, and the like. As shown in FIG. 1b, in a 5G communication system, the user plane network element may be a user plane function (user plane function, UPF) network element, and may include an intermediate user plane function (intermediate user plane function, I-UPF) network element and an anchor user plane function (anchor user plane function, A-UPF) network element. In a future communication system, the user plane network element may still be the UPF network element, or may have another name. This is not limited in this application.
5. Access management network element: The access management network element is mainly used for mobility management, access management, and the like, and may be configured to implement functions, for example, lawful interception and access authorization/authentication, other than session management in functions of a mobility management network element (mobility management entity, MME). As shown in FIG. 1b, in a 5G communication system, the access management network element may be an access and mobility management function (access and mobility management function, AMF) network element. In a future communication system, the access management network element may still be the AMF network element, or may have another name. This is not limited in this application.
6. Session management network element: The session management network element is mainly configured to: manage a session, allocate and manage an internet protocol (internet protocol, IP) address of a terminal device, select an endpoint that can manage a user plane function interface and a policy control and charging function interface, notify downlink data, and so on. As shown in FIG. 1b, in a 5G communication system, the session management network element may be a session management function (session management function, SMF) network element, and may include an intermediate session management function (intermediate session management function, I-SMF) network element and an anchor session management function (anchor session management function, A-SMF) network element. In a future communication system, the session management network element may still be the SMF network element, or may have another name. This is not limited in this application.
7. Policy control network element: The policy control network element is configured to: provide guidance on a unified policy framework for network behavior, provide policy rule information for a control plane function network element (such as the AMF network element or the SMF network element), generally make a policy decision based on subscription information, and so on. In a 4G communication system, the policy control network element may be a policy and charging rules function (policy and charging rules function, PCRF) network element. As shown in FIG. 1b, in a 5G communication system, the policy control network element may be a policy control function (policy control function, PCF) network element. In a future communication system, the policy control network element may still be the PCF network element, or may have another name. This is not limited in this application.
8. Data management network element: The data management network element is configured to: process a terminal device identifier, perform access authentication, registration, and mobility management, manage subscription data and authentication data of a user, and so on. As shown in FIG. 1b, in a 5G communication system, the data management network element may be a unified data management (unified data management, UDM) network element. In a future communication system, the unified data management network element may still be the UDM network element, or may have another name. This is not limited in this application.
9. Unified data repository network element: The unified data repository network element is configured to: store and retrieve a PCF policy, store and retrieve structured data for exposure, store user information requested by an application function, and so on. As shown in FIG. 1b, in a 5G communication system, the unified data repository network element may be a unified data repository (Unified Data Repository, UDR) network element. In a future communication system, the unified data repository network element may still be the UDM network element, or may have another name. This is not limited in this application.
10. Application network element: The application network element is configured to: perform application-affected data routing, access a network exposure function network element, interact with a policy framework to perform policy control, and so on. As shown in FIG. 1b, in a 5G communication system, the application network element may be an application function (application function, AF) network element. In a future communication system, the application network element may still be the AF network element, or may have another name. This is not limited in this application.
11. Network exposure function network element: The network exposure function network element is configured to: provide a network customization function, connect a core network element to an external application server, and provide services such as authentication and data forwarding when the external application server initiates a service request to a core network. As shown in FIG. 1b, in a 5G communication system, the network exposure function network element may be a network exposure function (network exposure function, NEF) network element. In a future communication system, the network exposure function network element may still be the NEF network element, or may have another name. This is not limited in this application.
12. Direct discovery name management function network element: The direct discovery name management function network element is configured to be responsible for generating and allocating a ProSe discovery parameter. As a logical network element, the direct discovery name management function network element can be integrated into another network element during deployment. As shown in FIG. 1b, in a 5G communication system, the direct discovery name management function network element may be a direct discovery name management function (Direct Discovery Name Management Function, DDNMF) network element. In a future communication system, the direct discovery name management function network element may still be the DDNMF network element, or may have another name. This is not limited in this application.

In FIG. 1b, some functions of the proximity-based services function network element (ProSe Function) in FIG. 1a may be implemented through the PCF network element, for example, a function of interacting with another core network element in a ProSe communication process. The DDNMF network element in FIG. 1b may inherit an allocation function of some parameters in the proximity-based services function network element (ProSe Function) in FIG. 1a, for example, allocation of a discovery parameter mentioned in subsequent content. In FIG. 1a, the proximity-based services function network element (ProSe Function) may be deployed on a user plane of a core network. In FIG. 1b, in a possible implementation, the DDNMF may be deployed on a control plane.

It may be understood that the network elements or the functions may be network elements in a hardware device, software functions running on dedicated hardware, or virtualized functions instantiated on a platform (for example, a cloud platform). One or more services may be obtained through division into the network elements or the functions. Further, services that exist independently of network functions may occur. In this application, instances of the functions, instances of services included in the functions, or instances of services that exist independently of network functions may be referred to as service instances.

It should be noted that embodiments of this application are not limited to the foregoing system architecture, and may be further applied to another future communication system, for example, a 6th generation communication (6th generation, 6G) system architecture. In addition, in embodiments of this application, names of the foregoing used network elements may change while functions of the network elements may remain the same in a future communication system.

FIG. 1c and FIG. 1d are examples of schematic diagrams of structures of two proximity-based services links. As shown in FIG. 1c, a first terminal device and a second terminal device may directly establish a connection based on a PC5 interface, and no other relay apparatus is required between the first terminal device and the second terminal device. In this case, data transmitted between the first terminal device and the second terminal device does not need to be forwarded by a base station or a relay apparatus. As shown in FIG. 1d, a first terminal device and a second terminal device may separately establish a connection to a relay apparatus (UE-TO-UE relay) based on a PC5 interface. In this case, data needs to be transmitted between the first terminal device and the second terminal device through the relay apparatus. In this manner of establishing a proximity-based services link based on the relay apparatus, the terminal device can obtain a larger communication range, and communication quality of two terminal devices that are far away from each other can be improved.

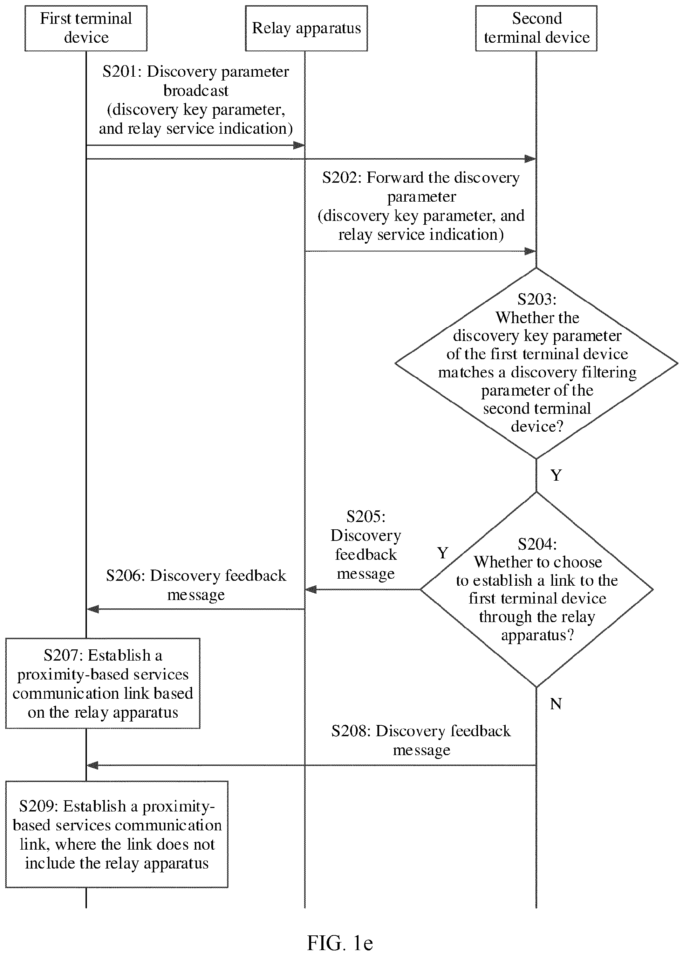

FIG. 1e is an example of a schematic flowchart of a proximity-based services link establishment method. As shown in FIG. 1e, the method includes the following steps.

S201: A first terminal device broadcasts a discovery parameter.

Correspondingly, both a relay apparatus and a second terminal device receive the discovery parameter.

The first terminal device needs to use a proximity-based services terminal device, is a terminal device that initiates proximity-based services communication, is an initiator, and may be written as announcing UE or discover UE in English. The discovery parameter broadcast by the first terminal device may also be referred to as a discovery parameter broadcast of the first terminal device, and the discovery parameter broadcast may be written as a discovery request (announce) in English.

In a possible implementation, before step S201, the first terminal device may apply to a network device (for example, the ProSe function mentioned in the foregoing content) for a discovery key parameter. The discovery key parameter may be written as a ProSe Application code in English, or the discovery key parameter may be written as a ProSe App code in English, or the discovery key parameter may be written as a ProSe response code in English. The discovery parameter further includes a relay service indication, and a value of the relay service indication is set to 1, indicating that the discovery parameter sent by the first terminal may be further forwarded once.

S202: After receiving the discovery parameter, if the relay apparatus determines that the discovery parameter includes relay service indication information, and the value of the relay service indication is 1, the relay apparatus forwards the discovery parameter. After receiving the discovery parameter, if the relay apparatus determines that there is no relay service indication information in the discovery parameter, or the value of the relay service indication is 0, the relay apparatus stops forwarding the discovery parameter.

The value of the relay service indication in the discovery parameter forwarded by the relay apparatus is modified to 0, indicating that a quantity of times that the discovery parameter forwarded by the relay apparatus may be further forwarded is 0. In this way, if another relay apparatus receives the discovery parameter forwarded by the relay apparatus, the another relay apparatus stops forwarding the discovery parameter, to avoid a case in which the discovery parameter is always forwarded between relay apparatuses for a plurality of times.

Correspondingly, the second terminal device receives the discovery parameter from the relay apparatus, and the value of the relay service indication in the discovery parameter is 0.

S203: The second terminal device determines whether a discovery filtering parameter matches the discovery key parameter of the first terminal device. If the discovery filtering parameter matches the discovery key parameter, step 204 is performed; or if the discovery filtering parameter does not match the discovery key parameter, the procedure ends.

In a possible implementation, before step S203, the second terminal device may apply to the network device (for example, the ProSe function mentioned in the foregoing content) for the discovery filtering parameter. The discovery filtering parameter may be written as a discovery filter or a discover response filter. The second terminal device is a monitor, and monitors the discovery parameter broadcast by the first terminal device. The second terminal device may be written as monitoring UE or discoverer UE in English.

For example, the network device sends, to the second terminal device, the ProSe APP Code allocated to the first terminal device as a part of the discovery filtering parameter. That is, the discovery key parameter is a part of bytes in the discovery filtering parameter. When the second terminal device learns that the discovery key parameter broadcast by the first terminal device is completely the same as content of a segment of bytes in the discovery filtering parameter, it may be considered that the discovery key parameter completely matches the discovery filtering parameter.

Because the second terminal device receives the discovery parameter from the relay apparatus and the discovery parameter from the first terminal device, for the second terminal device, there are two paths for establishing a link to the first terminal device. Which path is specifically selected may be selected by the second terminal device through the following step S204.

S204: The second terminal device determines whether to choose to establish the link to the first terminal device through the relay apparatus. If yes, step S205 is performed; or if no, step S208 is performed.

In step 204, the second terminal device may perform selection based on signal strength of the discovery parameter from the first terminal device and the discovery parameter from the relay apparatus. For example, if the signal strength of the discovery parameter from the relay apparatus is strong, the second terminal device chooses to establish the connection to the first terminal device through the relay apparatus, namely, the link structure shown in FIG. 1d. If the signal strength of the discovery parameter received from the first terminal device is strong, the second terminal device chooses to directly establish the connection to the first terminal device, that is, stops establishing the connection through the relay apparatus, namely, the link structure shown in FIG. 1c.

S205: The second terminal device returns a discovery feedback message to the relay apparatus.

The discovery feedback message may be written as request accept in English.

S206: The relay apparatus forwards the discovery feedback message to the first terminal device.

Correspondingly, the first terminal device receives the discovery feedback message from the relay apparatus.

S207: The first terminal device establishes a UE-to-UE link based on the relay apparatus. The link established in S207 is in the link structure shown in FIG. 1d.

S208: The second terminal device sends a discovery feedback message to the first terminal device.

Correspondingly, the first terminal device receives the discovery feedback message from the second terminal device.

S209: The first terminal device establishes a UE-to-UE link to the second terminal device, where the link does not include the relay apparatus. The link established in S209 is in the link structure shown in FIG. 1c.

In the method shown in FIG. 1e, because the second terminal device receives the discovery parameter from the relay apparatus and the discovery parameter from the first terminal device, for the second terminal device, there are two paths for establishing the link to the first terminal device. Which path is specifically selected may be selected by the second terminal device. For example, the second terminal device may perform selection based on the signal strength of the discovery parameter from the first terminal device and the discovery parameter from the relay apparatus, that is, perform selection through step S204. In another possible implementation, selection may alternatively be performed by the first terminal device. In this case, after step S203, the second terminal device may return one discovery feedback message to the first terminal device through the relay apparatus, and the second terminal device also needs to directly return one discovery feedback message to the first terminal device (that is, the second terminal device does not need to feed back the discovery feedback message through the relay apparatus). Because the first terminal device separately receives the two discovery feedback messages from the relay apparatus and the first terminal device, for the first terminal device, there are two paths for establishing the link to the second terminal device. Which path is specifically selected may be selected by the first terminal device, for example, may be selected based on signal strength of the two discovery feedback messages from the second terminal device and the relay apparatus.

In this embodiment of this application, there may be two discovery modes in a discovery mechanism of ProSe communication: an open mode (Open discovery) and a restricted mode (Restricted discovery). As the name implies, in the open mode, any terminal device (or user) authorized by using a ProSe service may apply for a ProSe discovery parameter provided that the terminal device (or user) is interested in a ProSe application, and then monitor whether there is announcing UE (Announcing UE) nearby. When the discovery key parameter matches the discovery filtering parameter, a ProSe connection may be established. In the restricted mode, based on different application requirements (that is, determined by a ProSe application), only a part of terminal devices (or users) are qualified to perform node discovery. In other words, the application service is restricted to a part of terminal devices (or users) for use (for example, used in some multicast scenarios, or used by only a terminal device (or user) authenticated by an application server). Therefore, when the terminal device (or the user) applies to the ProSe Function for the ProSe discovery parameter, an application message carries a discovery mode identifier, to indicate whether the terminal device (or the user) initiates ProSe discovery in the open mode or the restricted mode. When receiving an application for the discovery parameter in the restricted mode, the ProSe Function module needs to verify, from the ProSe application server, whether the terminal device (or the user) has permission to apply for ProSe discovery in the restricted mode. The ProSe Function module returns the ProSe discovery parameter to the terminal device (or the user) only when the verification succeeds.

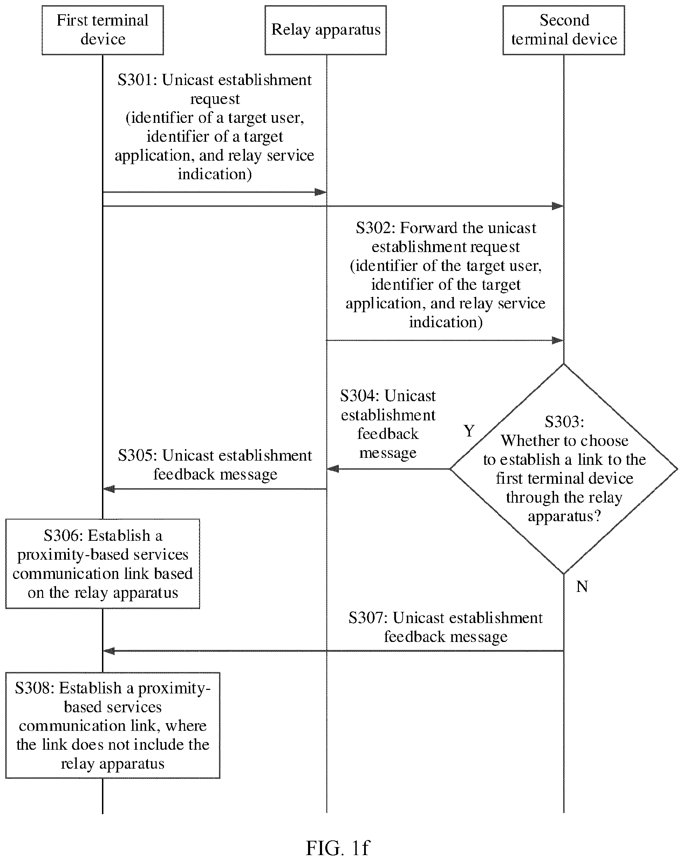

FIG. 1f is an example of a schematic flowchart of a proximity-based services link establishment method. As shown in FIG. 1f, the method includes the following steps.

S301: A first terminal device sends a unicast establishment request.

The first terminal device may broadcast the unicast establishment request, and the unicast establishment request may be written as a direct communication request in English. Correspondingly, both a relay apparatus and a second terminal device may receive the unicast establishment request.

The first terminal device needs to use a proximity-based services terminal device, is a terminal device that initiates proximity-based services communication, and is an initiator.

In a possible implementation, the unicast establishment request includes an identifier of a target user, an identifier of a target application, and a relay service indication. The identifier of the target application is an application running on the first terminal device, and is an application corresponding to data that needs to be transmitted by using a proximity-based service requested by the first terminal device. The target user is a user that logs in to the target application running on the first terminal device. A value of the relay service indication in the unicast establishment request may be set to 1, indicating that a discovery parameter sent by the first terminal may be further forwarded once.

In a possible implementation, the unicast establishment request may further carry an identifier of the second terminal device. In this case, it may be considered that the unicast establishment request may be considered as a user-oriented (UE oriented) unicast establishment request. If the request message does not carry the identifier of the second terminal device, the unicast establishment request may be considered as service-oriented or application-oriented (Service or Application oriented). Optionally, the unicast establishment request may further carry group identification information (Group ID). In this case, the unicast request message may be considered to be oriented to a restricted user. For example, if the unicast establishment request carries the Group ID, any terminal device in a same group may send a unicast establishment feedback message to the first terminal device, so that the first terminal device establishes a proximity-based services link to one terminal device in a same group.

S302: The relay apparatus receives the unicast establishment request, and if finding that the value of the relay service indication in the unicast establishment request is 1, forwards the unicast establishment request. After receiving the unicast establishment request, if the relay apparatus determines that the unicast establishment request includes relay service indication information, and the value of the relay service indication is 1, the relay apparatus forwards the unicast establishment request. After receiving the unicast establishment request, if the relay apparatus determines that the unicast establishment request does not include relay service indication information, or the value of the relay service indication is 0, the relay apparatus stops forwarding the unicast establishment request.

The value of the relay service indication in the unicast establishment request forwarded by the relay apparatus is modified to 0, indicating that a quantity of times that the unicast establishment request forwarded by the relay apparatus may be further forwarded is 0. In this way, if another relay apparatus receives the unicast establishment request forwarded by the relay apparatus, the another relay apparatus stops forwarding the unicast establishment request, to avoid a case in which the unicast establishment request is always forwarded between relay apparatuses for a plurality of times. Optionally, the unicast establishment request forwarded by the relay apparatus may further include an identifier of the relay apparatus.

Correspondingly, the second terminal device receives the unicast establishment request from the relay apparatus, and the value of the relay service indication in the unicast establishment request is 0.

In step S302, a possible implementation is further included. The relay apparatus may determine, based on some cases, for example, a QoS requirement and a load status of the relay apparatus, whether the unicast establishment request needs to be forwarded. For example, the first terminal device may include a QoS parameter (for example, a bandwidth) in the unicast establishment request. After receiving the unicast establishment request, the relay apparatus determines, with reference to load (namely, a bandwidth that can be provided) of the current relay apparatus, whether the QoS parameter can be supported. Alternatively, the relay apparatus stores a preset default mapping relationship between an application identifier and a QoS parameter. When the relay apparatus receives the unicast establishment request, and the unicast establishment request carries the identifier of the target application, the relay apparatus may determine, based on the preset mapping relationship, whether a QoS parameter corresponding to the target application can meet the QoS parameter in the unicast establishment request.

S303: The second terminal device determines whether to choose to establish a link to the first terminal device through the relay apparatus. If yes, step S304 is performed; or if no, step S307 is performed.

In step S303, the second terminal device may perform selection based on signal strength of the discovery parameter from the first terminal device and the discovery parameter from the relay apparatus. For example, if the signal strength of the discovery parameter from the relay apparatus is strong, the second terminal device chooses to establish the connection to the first terminal device through the relay apparatus, namely, the link structure shown in FIG. 1d. If the signal strength of the discovery parameter received from the first terminal device is strong, the second terminal device chooses to directly establish the connection to the first terminal device, that is, stops establishing the connection through the relay apparatus, namely, the link structure shown in FIG. 1c.

S304: The second terminal device returns a unicast establishment feedback message to the relay apparatus.

The unicast establishment feedback message may be written as request accept in English. In an optional implementation, the unicast establishment feedback message returned by the second terminal device may carry a unicast connection type indication, and the unicast connection type indication may indicate whether the second terminal device directly establishes the link to the first terminal device or establishes the link to the first terminal device through the relay apparatus. The unicast connection type indication in the unicast establishment feedback message in step S304 is used to indicate that the second terminal device establishes the proximity-based services link to the first terminal device based on the relay apparatus.

S305: The relay apparatus forwards the unicast establishment feedback message to the first terminal device.

Correspondingly, the first terminal device receives the unicast establishment feedback message from the relay apparatus.

S306: The first terminal device establishes a proximity-based services communication link based on the relay apparatus. The link established in S306 is in the link structure shown in FIG. 1d.

S307: The second terminal device sends a unicast establishment feedback message to the first terminal device.

Correspondingly, the first terminal device receives the unicast establishment feedback message from the second terminal device. A unicast connection type indication may be added to the unicast establishment feedback message. The unicast connection type indication in the unicast establishment feedback message in step S307 is used to indicate that the second terminal device directly establishes the proximity-based services link to the first terminal device, and the link does not include the relay apparatus.

S308: The first terminal device establishes a proximity-based services communication link to the second terminal device, where the link does not include the relay apparatus. The link established in S308 is in the link structure shown in FIG. 1c.

In the method shown in FIG. 1f, because the second terminal device receives the unicast establishment request from the relay apparatus and the unicast establishment request from the first terminal device, for the second terminal device, there are two paths for establishing the link to the first terminal device. Which path is specifically selected may be selected by the second terminal device, for example, may be selected based on signal strength of the unicast establishment request from the first terminal device and the unicast establishment request from the relay apparatus. In another possible implementation, selection may alternatively be performed by the first terminal device. In this case, after step S302, the second terminal device may return one unicast establishment feedback message to the first terminal device through the relay apparatus, and the second terminal device also needs to directly return one unicast establishment feedback message to the first terminal device without using the relay apparatus. Because the first terminal device separately receives the two unicast establishment feedback messages from the relay apparatus and the first terminal device, for the first terminal device, there are two paths for establishing the link to the second terminal device. Which path is specifically selected may be selected by the first terminal device, for example, may be selected based on signal strength of the two unicast establishment feedback messages from the second terminal device and the relay apparatus.

It can be learned from FIG. 1e and FIG. 1f that the proximity-based services link is established between the first terminal device and the second terminal device, whether the link includes the relay apparatus depends on the first terminal device or the second device, and the first terminal device or the second terminal device determines, only based on the signal strength, whether the proximity-based services link includes the relay apparatus. However, a deployer of the relay apparatus or an owner of the relay apparatus may expect the relay apparatus to serve only a specific application, that is, to serve only data of some specific applications. Based on occurrence of this problem, an embodiment of this application provides a relay link establishment method. In the method, when data of the target application is not allowed to be transmitted through the relay apparatus, the relay apparatus stops forwarding a first message, so that the first terminal device and the second terminal device can be prevented from establishing the link based on the relay apparatus, and therefore the first terminal device and the second terminal device can be prevented from transmitting the data of the target application through the relay apparatus. The following describes in detail, by using some embodiments, the solutions provided in embodiments of this application.

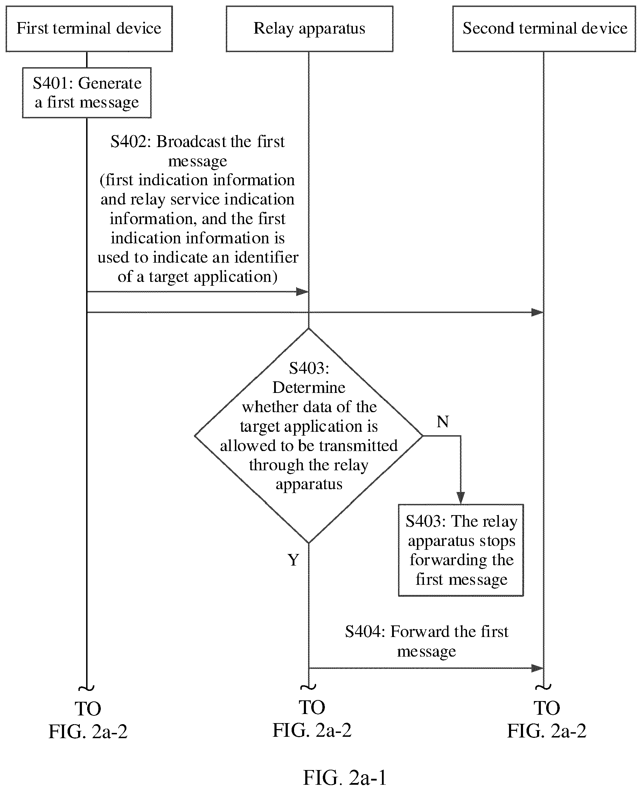

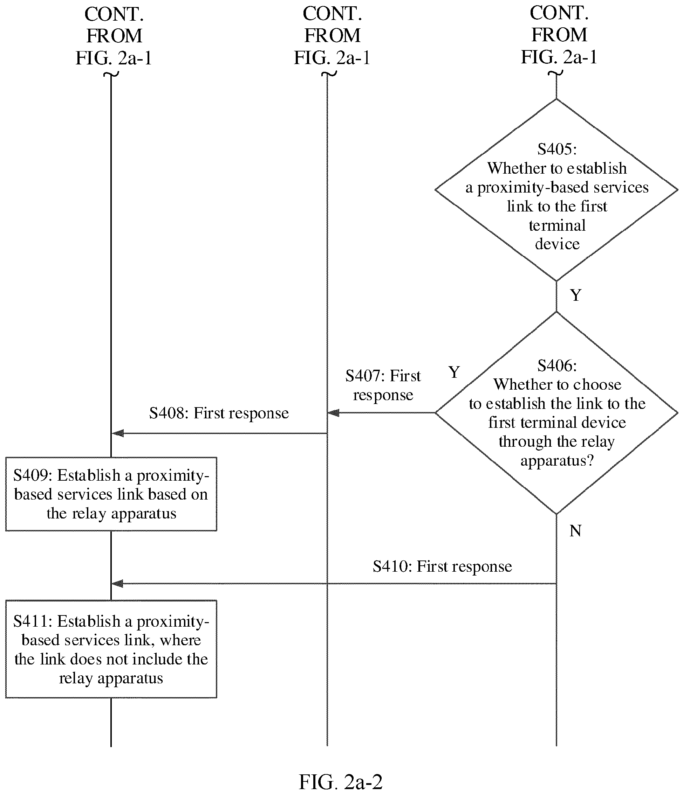

Based on the foregoing content, FIG. 2a-1 and FIG. 2a-2 are an example of a schematic flowchart of a relay link establishment method according to an embodiment of this application. As shown in FIG. 2a-1 and FIG. 2a- 2, the method includes the following steps.

S401: A first terminal device generates a first message.

The first message includes first indication information and relay service indication information.

The first indication information is used to indicate an identifier of a target application. The identifier of the target application mentioned in this embodiment of this application may be an application identifier (Application ID, APP ID), or may be a service identifier (Service ID). Data of one application mentioned in this embodiment of this application is data corresponding to an application running on one terminal device.

The relay service indication information is used to indicate the first terminal device to request to establish a relay link. The relay link in this embodiment of this application is a link, between terminal devices, that is established based on a relay apparatus. In a possible implementation, the relay service indication information may be written as rela_indication in English. A value of the relay service indication information in the first message sent by the first terminal device may be set to 1, indicating that a quantity of times that the first message may be further forwarded is 1. The value of the relay service indication information may also be understood as a quantity of relay hops in a proximity-based services link that is established between terminal devices. It may also be understood as that: when the value of the relay service indication information is 1, the relay service indication information is used to indicate the first terminal device to request to establish the relay link. When the value of the relay service indication information is 0, the relay service indication information is used to indicate the first terminal device to request to directly establish a proximity-based services connection to another terminal device, and the link does not include the relay apparatus.

In this embodiment of this application, the first terminal device may alternatively be a first apparatus.

In a possible implementation, the first message may be a discovery parameter broadcast, or may be a unicast establishment request, where the unicast establishment request may be written as a direct communication request in English.

S402: The first terminal device broadcasts the first message. The first message is used to request to establish the proximity-based services link.

Correspondingly, the relay apparatus may receive the first message from the first terminal device. A second terminal device may also receive the first message from the first terminal device. Certainly, a plurality of relay apparatuses and a plurality of second terminal devices may receive the first message. In this embodiment of this application, one relay apparatus and one second terminal device are used as an example for description.

S403: The relay apparatus determines whether data of the target application is allowed to be transmitted through the relay apparatus.

In a possible implementation, if the relay apparatus determines that the data of the target application is allowed to be transmitted through the relay apparatus, step S403 is performed. In a possible implementation, if the relay apparatus determines that the data of the target application is not allowed to be transmitted through the relay apparatus, the relay apparatus stops sending the first message. Optionally, the relay apparatus may discard the first message.

In this embodiment of this application, data transmission performed between the first terminal device and the second terminal device based on the proximity-based services link is usually data transmission performed between the first terminal device and the second terminal device based on an application, and the application is referred to as a target application. For example, the first terminal device performs data transmission with the second terminal device through WeChat ^{™}, and the target application is WeChat.

A solution of how the relay apparatus determines whether the data of the target application is allowed to be transmitted through the relay apparatus in this step is described in detail in subsequent content, and is not described herein.

In this embodiment of this application, that the relay apparatus, determines whether the data of the target application is allowed to be transmitted through the relay apparatus may alternatively be replaced with: The relay apparatus determines whether to allow the first terminal device to establish the proximity-based services link through the relay device. In this embodiment of this application, the first terminal device may initiate a plurality of requests for establishing the proximity-based services link, and target applications corresponding to data requested to be transmitted for two requests for establishing the proximity-based services link may be the same or different. Therefore, the relay apparatus needs to determine, for each request initiated by the first terminal device for requesting to establish the proximity-based services link, whether to allow the first terminal device to establish the proximity-based services link through the relay device. For the two requests initiated by the first terminal device for requesting to establish the proximity-based services link, the relay apparatus may allow the first terminal device to establish the proximity-based services link through the relay device at one time, and may not allow the first terminal device to establish the proximity-based services link through the relay device at the other time.

In step S403, when the relay apparatus determines that the data of the target application is not allowed to be transmitted through the relay apparatus, the relay apparatus stops forwarding the first message. Therefore, the second terminal device does not receive the first message from the relay apparatus, and the second terminal device stops establishing the link to the first terminal device based on the relay apparatus, so that the data of the target application can be prevented from being transmitted through the relay apparatus.

In addition, when the relay apparatus stops sending the first message, the second terminal device may receive the first message only from the first terminal device. In this case, if the second terminal device determines to establish the proximity-based services link to the first terminal device (for example, the first message further includes a discovery key parameter; and when determining that a discovery filtering parameter of the second terminal device matches the discovery key parameter, the second terminal device determines to establish the proximity-based services link to the first terminal device), the proximity-based services link no longer includes the relay apparatus. In this case, the second terminal device directly returns a first response to the first terminal device, and the first terminal device receives the first response only from the second terminal device. Therefore, the proximity-based services link is established between the first terminal device and the second terminal device, and the link no longer includes the relay apparatus.

In step S403, in a possible implementation, if the first message received by the relay apparatus carries information corresponding to a group identifier (Group ID), the target application provides the information for only a restricted user for use (where the relay apparatus knows, based on locally stored configuration information, that a relay service can be provided only for data of a part of users in the target application). For example, the configuration information of the relay apparatus includes only the group identifier (Group ID) but does not include group member information. Alternatively, the configuration information of the relay apparatus includes only the group identifier (Group ID), but the group member information does not include descriptions of a target user. Alternatively, the configuration information locally stored in the relay apparatus does not include the group identifier and the group member information. Alternatively, the relay apparatus does not locally store the configuration information of the relay apparatus. Alternatively, the local configuration information in the relay apparatus does not include information about a list of identifiers of restricted users, or the information about the list does not include an identifier of the target user. In these cases, the relay apparatus may verify, to a network device, a status of establishing authorization by the relay apparatus for the target user, that is, verify, from a network device side, whether the relay apparatus has permission to transmit data of the target user of the target application. After the verification succeeds, the network device may feed back a verification success indication to the relay device. If the verification fails, no information may be fed back or a verification failure indication may be fed back.

It should be noted that when the first terminal device broadcasts the first message, a plurality of relay apparatuses receive the first message. In FIG. 2a-1 and FIG. 2a-2, for ease of description, only one relay apparatus is used as an example.

S404: The relay apparatus sends the first message.

Correspondingly, the second terminal device receives the first message from the relay apparatus.

In S404, that the relay apparatus sends the first message may specifically refer to forwarding the first message. In a possible implementation, the relay apparatus modifies the value of the relay service indication information in the received first message to 0, indicating that the quantity of times that the first message sent by the relay apparatus may be further forwarded is 0. In this way, after receiving the first message, another relay apparatus stops forwarding the first message, so that the first message can be prevented from being forwarded by the relay apparatus for a plurality of times. Optionally, the first message forwarded by the relay apparatus may also carry the first indication information, so that the another relay apparatus can determine, based on the first indication information, whether the data of the target application is allowed to be transmitted.

In a possible implementation, after receiving the first message, the relay apparatus further changes a target address and a source address in the first message. Specifically, a source address in the first message broadcast by the first terminal device is an address of the first terminal device, and a source address in the first message sent by the relay apparatus is a source address of the relay apparatus. In this embodiment of this application, an address of a terminal device or a relay apparatus may be a medium access control (Medium Access Control, MAC) address, an internet protocol (Internet Protocol, IP) address, or the like. Optionally, the first message forwarded by the relay apparatus may carry a layer-2 identifier of the relay apparatus, so that the second terminal device or the another relay apparatus uses the layer-2 identifier as a destination address of a feedback message.

In another possible implementation, after receiving the first message, the relay apparatus may add a message header, or referred to as a packet header, to the first message. The first message is used as a message body, the message header may include a source address, and the source address is an address of the relay apparatus. In a possible implementation, the first message may further carry an identifier of the relay apparatus, and the identifier of the relay apparatus may be written as a relay ID in English.

S405: The second terminal device determines whether to establish the proximity-based services link to the first terminal device. If yes, step S406 is performed; or if no, the procedure ends.

In step S405, because the second terminal device receives the first message, the second terminal device needs to determine whether to establish the proximity-based services link to the first terminal device.

In a possible implementation, if the first message further includes a discovery key parameter; and when determining that a discovery filtering parameter of the second terminal device matches the discovery key parameter, the second terminal device determines to establish the proximity-based services link to the first terminal device. When determining that the discovery filtering parameter of the second terminal device does not match the discovery key parameter, the second terminal device determines not to establish the proximity-based services link to the first terminal device.

S406: The second terminal device determines whether to choose to establish the link to the first terminal device through the relay apparatus. If yes, step S407 is performed; or if no, step S410 is performed.

When the second terminal device receives only the first message from the first terminal device, the second terminal device can only choose to directly establish the link to the first terminal device, and the connection does not include the relay apparatus.

When the second terminal device receives the first message from the relay apparatus and the first message from the first terminal device, for the second terminal device, there are two paths for establishing the link to the first terminal device. In a possible implementation, which path is specifically selected may be selected by the second terminal device. For example, the second terminal device may perform selection based on signal strength of the first message from the first terminal device and the first message from the relay apparatus. For example, if the signal strength of the first message from the relay apparatus is strong, the second terminal device chooses to establish the connection to the first terminal device through the relay apparatus, namely, the link structure shown in FIG. 1d. If the signal strength of the first message received from the first terminal device is strong, the second terminal device chooses to directly establish the connection to the first terminal device, that is, stops establishing the connection through the relay apparatus, namely, the link structure shown in FIG. 1c. Optionally, the second terminal device may perform selection based on values of information powers of the first message from the first terminal device and the first message from the relay apparatus.

S407: The second terminal device returns a first response to the relay apparatus.

In a possible implementation, when the first message is the discovery parameter broadcast, the first response may be a discovery feedback message, and the discovery feedback message may be written as request accept in English. In a possible implementation, the first response may alternatively be a unicast establishment request.

In a possible implementation, when the first message is a unicast establishment request, the first response may be a unicast establishment feedback, and the unicast establishment feedback may be written as request accept in English. In addition, a unicast connection type indication may be added to the first response, and the unicast connection type indication may indicate whether the second terminal device directly establishes the link to the first terminal device or establishes the link to the first terminal device through the relay apparatus. Similar to the unicast connection type indication in the unicast establishment feedback message in step S304, the unicast connection type indication in the first response in step S407 is used to indicate that the second terminal device establishes the proximity-based services link to the first terminal device based on the relay apparatus.

In a possible implementation, the first response fed back by the second terminal device may carry a user identifier of the second terminal device, for example, may be an identifier of a ProSe application layer, for example, a WeChat ^{™} account, a QQ ^{™} account, or a layer 2 identifier.

In a possible implementation, the first message may be a unicast establishment request, and the first response may be a unicast establishment feedback message. In this case, the unicast establishment feedback message may carry an identifier of a third user. The third user is a user that logs in to the target application running on the second terminal device. The target user that may be carried in the unicast establishment request sent by the first terminal device is a group identifier. In this case, the relay apparatus needs to determine whether a group identifier of the identifier of the third user is also the group identifier of the target user. The proximity-based services link is allowed to be established between the first terminal device and the second terminal device through the relay apparatus, only when the identifier of the third user is the same as the identifier of the target user. The unicast establishment feedback message may carry the identifier of the third user, or may carry the group identifier of the third user. The relay apparatus may determine, based on the locally stored configuration information of the relay apparatus, whether the identifier of the third user and the identifier of the target user correspond to a same group identifier, or may perform verification from the network device. For a specific verification method, refer to related descriptions of step S302. Details are not described herein again.

S408: The relay apparatus forwards the first response to the first terminal device.

Correspondingly, the first terminal device receives the first response from the relay apparatus.

In a possible implementation, the first response forwarded by the relay apparatus may carry the identifier of the relay apparatus.

In a possible implementation, a unicast connection type indication may be added to the first response, and the unicast connection type indication in the first response in step S408 is used to indicate that the second terminal device establishes the proximity-based services link to the first terminal device through the relay apparatus.

S409: The first terminal device establishes a proximity-based services link based on the relay apparatus. The link established in S409 is in the link structure shown in FIG. 1d.

S410: The second terminal device sends a first response to the first terminal device.

Correspondingly, the first terminal device receives the first response from the second terminal device.

S411: The first terminal device establishes a proximity-based services link to the second terminal device, where the link does not include the relay apparatus. The link established in S411 is in the link structure shown in FIG. 1c.

In a possible implementation, a unicast connection type indication may be added to the first response, and the unicast connection type indication in the first response in step S411 is used to indicate that the second terminal device directly establishes the proximity-based services link to the first terminal device, and the link does not include the relay apparatus.

In step S409 and step S411, in a process of establishing the proximity-based services link between the first terminal device and the second terminal device, the first terminal device may perform signaling exchange for establishing a unicast connection with the second terminal device, and signaling may include information such as a quality of service (Quality of Service, QoS) parameter and an internet protocol (Internet Protocol, IP) address that are used for communication.

After step S409 and step S411, the first terminal device and the second terminal device report link complete information to the network device. If the proximity-based services link includes the relay apparatus, the relay apparatus may also report the link complete information to the network device. When the proximity-based services link includes the relay apparatus, the link complete information may be used by the network device to perform secondary verification on whether the first terminal device and the second terminal device can use the relay apparatus to perform a relay service. In another aspect, the link complete information may be used to record a relationship between communication nodes for charging.

If the proximity-based services link includes the relay apparatus, in a possible implementation, the first terminal device (or the second terminal device or the relay apparatus) may send connection establishment information to an AMF network element (or a PCF network element or a 5G DDNMF network element), and the connection establishment information may carry an identifier of the first terminal device, an identifier of the second terminal device, and the identifier of the relay apparatus. The network device may perform secondary verification on whether the first terminal device and the second terminal device can use the relay apparatus to perform the relay service. Specifically, the AMF network element (or the PCF network element or the 5G DDNMF network element) may query, from user subscription information based on the identifiers of the first terminal device and the second terminal device, whether the first terminal device and the second terminal device have permission to use the relay service. After the verification succeeds, the network device may send authorization information to the relay apparatus.

If the proximity-based services link includes the relay apparatus, when the network device needs to charge the proximity-based services connection, after receiving a connection report message from the first terminal device (or the second terminal device or the relay apparatus), an AMF network element (or a PCF network element or a 5G DDNMF network element) may send a binding relationship of the group of users (the first terminal device and the second terminal device) to a charging system, for example, a charging function (Charging Function, CHF) network element. Alternatively, the first terminal device (or the second terminal device or the relay apparatus) sends the binding relationship of the group of users (the first terminal device and the second terminal device) to the charging system.

In the method shown in FIG. 2a-1 and FIG. 2a-2, the second terminal device selects the proximity-based services link. In another possible implementation, the first terminal device selects the proximity-based services link. In this case, if the second terminal device determines to establish the proximity-based services link to the first terminal device, the second terminal device may return one first response to the first terminal device through the relay apparatus, and the second terminal device also directly returns one first response to the first terminal device (that is, the proximity-based services link between the first terminal device and the second terminal device does not include the relay apparatus). Because the first terminal device separately receives the two first responses from the relay apparatus and the first terminal device, for the first terminal device, there are two paths for establishing the link to the second terminal device. Which path is specifically selected may be selected by the first terminal device, for example, may be selected based on signal strength of the two first responses from the second terminal device and the relay apparatus.

When the first message in FIG. 2a-1 and FIG. 2a-2 is the discovery parameter broadcast in FIG. 1e, and the first response is the discovery feedback message in FIG. 1e, that is, if the procedure in FIG. 2a-1 and FIG. 2a-2 is compatible with the direct discovery procedure in FIG. 1f, in a process in which the 5G DDNMF module may allocate the discovery parameter to the terminal device, a user that can use a related application may be restricted to use the relay service based on a restricted mode requirement of the application.

In the foregoing step S403, there are a plurality of implementations for determining, by the relay apparatus, whether the data of the target application is allowed to be transmitted through the relay apparatus. For example, when determining that a first condition is met, the relay apparatus determines that the data of the target application is allowed to be transmitted through the relay apparatus; otherwise, the relay apparatus determines that the data of the target application is not allowed to be transmitted through the relay apparatus. The following describes in detail a plurality of possible implementations of the first condition.

Manner 1: The first condition includes: An identifier of a first application in the configuration information of the relay apparatus matches the identifier of the target application.

In Manner 1, the first indication information in the first message is used to indicate the identifier of the target application.

In a possible implementation, when the first message is the discovery parameter broadcast, and the discovery key parameter (or the ProSe App code) may indicate the identifier of the target application (for example, the discovery key parameter is an email address, and a suffix of the email address may indicate that the identifier of the target application is an identifier of an application corresponding to the email address), the first indication information may be the discovery key parameter, or the first indication information is the ProSe App code. In this case, it can be learned that content of the first message is the same as that of a discovery parameter broadcast in the conventional technology, so that compatibility with the conventional technology can be further improved.

In another aspect, when the discovery key parameter (or the ProSe App code) cannot indicate the identifier of the target application, and when the first message is the discovery parameter broadcast, in addition to the discovery key parameter, the first message further needs to include the first indication information and the relay key indication information. The first indication information may be the identifier of the target application, or may be indication information that can indicate the identifier of the target application, for example, may be a mapping identifier that can be used by the relay apparatus, the first terminal device, and the second terminal device to identify the identifier of the target application that. For example, the mapping identifier may be an email account, and a suffix of the email account may display the identifier of the target application. In this way, the relay apparatus may determine, based on the first indication information, whether the first condition is met.

In this embodiment of this application, in a possible implementation, the network device configures the configuration information of the relay apparatus for the relay apparatus, or configures the configuration information of the relay apparatus for the relay apparatus in a manual configuration manner. For example, the network device may generate the configuration information of the relay apparatus according to a preset first rule. Before that the relay apparatus receives the first message from the first terminal device, the method further includes: The relay apparatus receives the configuration information from the network device. The configuration information of the relay apparatus is described in Manner 1, and subsequent Manner 2 and Manner 3.

In Manner 1, the configuration information of the relay apparatus includes an identifier of at least one application. The relay apparatus allows data of each of the at least one application to be transmitted through the relay apparatus. The first application is one of the at least one application. The first condition may alternatively be described as follows: When an identifier of one application in the identifier of the at least one application in the configuration information of the relay apparatus matches the identifier of the target application, it is determined that the data of the target application is allowed to be transmitted through the relay apparatus.

In this embodiment of this application, that the identifier of the first application matches the identifier of the target application may mean that the identifier of the first application is the same as the identifier of the target application. In another possible implementation, a part of bytes of the identifier of the first application may be the same as a part of bytes of the identifier of the target application. For example, a first company includes an application A and an application B. In a possible implementation, an identifier of the application A includes a company identifier (001)+1, and an identifier of the application B includes a company identifier (001)+2. It may be specified that, when the identifier of the target application is the same as the first three characters of the identifier of the first application, it is determined that the target application matches the first application. In this way, when the identifier of the target application in the first message is 0011 or 0012, and the identifier of the first application is 0011, the identifier of the target application in the first message matches the identifier of the first application. In this case, when only an identifier of one application of the company is configured for the configuration information of the relay apparatus, the relay apparatus can support transmission of data of a plurality of applications of the company through the relay apparatus. In this case, a data volume of the configuration information can be reduced, and storage space of the relay apparatus can be saved. In addition, in a process of comparing whether the identifier of the first application matches the identifier of the target application, the relay apparatus can also accelerate a comparison speed, to improve a data processing speed; and the first terminal device and the second terminal device may not expose all identification information of a specifically used application to the relay apparatus, and the first indication information may display only a part of fields of the identifier of the target application, for example, the first three characters. In this way, user privacy can be further protected.

Manner 2: The first condition includes: An identifier of a first application in the configuration information of the relay apparatus matches the identifier of the target application, and an identifier of a first user corresponding to the first application in the configuration information of the relay apparatus matches the identifier of the target user.

In Manner 2, in addition to being used to indicate the identifier of the target application, the first indication information in the first message is further used to indicate the identifier of the target user. The target user is a user that logs in to the target application running on the first terminal device. It may alternatively be described as: The target user is a user of the target application of the first terminal device.

In a possible implementation, in Manner 2, because user level granularity division is further performed, step S403 may alternatively be described as: The relay apparatus determines whether the data of the target application corresponding to the target user is allowed to be transmitted through the relay apparatus. If the data of the target application is allowed to be transmitted through the relay apparatus, step S403 is performed; or if the data of the target application is not allowed to be transmitted through the relay apparatus, the relay apparatus stops sending the first message.

In a possible implementation, when the first message is the discovery parameter broadcast, and the discovery key parameter (or the ProSe App code) may indicate the identifier of the target application, the discovery key parameter may be at a user granularity. That is, the discovery key parameter may indicate the identifier of the target user, or it may said that the discovery key parameter is the identifier of the target user in another way. In this case, the discovery key parameter and indication information that can indicate the identifier of the target user may be referred to as the first indication information. When the discovery key parameter cannot indicate the identifier of the target user, the indication information used to indicate the identifier of the target user may be added to the first message. In this case, the indication information used to indicate the identifier of the target user may also be referred to as the first indication information.

In another aspect, when the discovery key parameter (or the ProSe App code) cannot indicate the identifier of the target application, and when the first message is the discovery parameter broadcast, in addition to the discovery key parameter, the first message further needs to include the first indication information and the relay key indication information. The first indication information may include indication information that can indicate the identifier of the target application and indication information that can indicate the identifier of the target user. The indication information that can indicate the identifier of the target application and the indication information that can indicate the identifier of the target user may be same information (for example, the indication information that can indicate the identifier of the target user is an email account of a user, and a suffix of the email account is the identifier of the target application corresponding to the email account), or may be two different pieces of information. The indication information that can indicate the identifier of the target application may be the identifier of the target application, or may be indication information that can indicate the identifier of the target application. The indication information that can indicate the identifier of the target user may be the identifier of the target user, or may be indication information that can indicate the identifier of the target user (for example, may be a discovery key parameter that can indicate the identifier of the target user). The identifier of the user in this embodiment of this application may be a generic public subscription identifier (Generic Public Subscription Identifier, GPSI) of the target user, an application layer identifier of the user (where the application layer identifier may be understood as a user identifier of the user in an application, for example, a QQ ^{™} account, a WeChat ^{™} account, or an email account), an IP address, a MAC address, or the like, or may be a user group identifier, for example, an external user group identifier (External Group Identifier). The user group identifier may be an identifier information list, or the user group identifier may be a list of identifiers of group members, or the like.

The configuration information of the relay apparatus includes an identifier of at least one application, and an identifier of each application in the identifier of the at least one application corresponds to an identifier of at least one user. For the identifier of each application in the identifier of the at least one application, and for an identifier of each user corresponding to the identifier of the application, the relay apparatus allows data of the application of the user to be transmitted through the relay apparatus. It may alternatively be described as: The first application is one of the at least one application, and for identifiers of all users corresponding to the first application, the relay apparatus allows data of all users corresponding to the first application to be transmitted through the relay apparatus.

In this embodiment of this application, that the identifier of the first user matches the identifier of the target user may mean that the identifier of the first user is the same as the identifier of the target user. In another possible implementation, the identifier of the first user may be a user group identifier, and the identifier of the target user may be an identifier of a single user in the user group identifier. In a possible implementation, the identifier of the target user may be formed by adding a field to a group identifier of the target user. In this case, if it is determined, based on the identifier of the target user, that the group identifier corresponding to the target user is the same as the identifier of the first user (where the identifier of the first user is the group identifier), it may be determined that the identifier of the first user matches the identifier of the target user. In this case, when only the group identifier corresponding to the user is configured for the configuration information of the relay apparatus, the relay apparatus can support transmission of data of a plurality of users of the group identifier through the relay apparatus. In this case, a data volume of the configuration information can be reduced, and storage space of the relay apparatus can be saved. In addition, in a process of comparing whether the identifier of the first application matches the identifier of the target application, the relay apparatus can also accelerate a comparison speed, to improve a data processing speed.

It can be learned that in Manner 2, in addition to determining whether data corresponding to an application is allowed to be transmitted through the relay apparatus, in another possible implementation, user level granularity division may be further performed on a user corresponding to the application. For example, the relay apparatus may transmit only data of a VIP user in the application through the relay apparatus, and data of a common user in the application is not allowed to be transmitted through the relay apparatus. In this way, more diversity may be achieved, and a solution is provided for a deployer of the relay apparatus at a finer granularity.

Manner 3: The first condition includes: A first relay service code in the configuration information of the relay apparatus matches a target relay service code.

In Manner 3, the first indication information in the first message is the target relay service code.

In a possible implementation, when the first message is the discovery parameter broadcast, the discovery key parameter further needs to include the target relay service code.

The configuration information of the relay apparatus includes at least one relay service code. The first relay service code is one of the at least one relay service code. The first condition may alternatively be described as: When an identifier of one of the at least one relay service code in the configuration information of the relay apparatus matches an identifier of the target relay service code, it is determined that the first terminal device is allowed to establish the proximity-based services relay link through the relay device, in other words, the first terminal device is allowed to establish the proximity-based services relay link through the relay device this time.

The relay service code in this embodiment of this application may be written as a Relay Service Code in English, or may be abbreviated as an RSC. The relay service code in this embodiment of this application may be understood as an identifier, or may be a temporary authorization code, for example, a token (token) or a key. The relay service code may also have another name in another scenario. This is not limited in this embodiment of this application.

In Manner 3, the network device further needs to configure configuration information of the target user for the target user, or configure configuration information of the target user for the relay apparatus in a manual configuration manner. For example, the network device may generate the configuration information of the target user according to a preset second rule. The configuration information of the target user includes at least one relay service code.

In a possible implementation, there may be a correspondence between the relay service code and an application identifier. One relay service code may correspond to an identifier of one or more applications. For example, one RSC may correspond to all or a part of applications of Huawei, or each application of Huawei may correspond to one RSC. A specific binding relationship is negotiated by an application service provider and an operator, which does not affect the implementation of this embodiment of the present invention. In a possible implementation, the application service provider or the network operator may periodically update a correspondence between a relay service code and an application. Therefore, permission of using the proximity-based services relay link when the terminal device transmits data of the application corresponding to the RSC may be restricted.

In another possible implementation, there may be a correspondence between a relay service code, an identifier of an application identifier, and an identifier of a user. The following provides detailed descriptions in Manner 3-a1 and Manner 3-a2.

Manner 3-a1: There is a correspondence between the relay apparatus, the relay service code, and the identifier of the application. One relay apparatus corresponds to one or more relay service codes, and one relay service code may correspond to an identifier of one or more applications.

Configuration information of one relay apparatus includes at least one relay service code. For each of the at least one relay service code in the configuration information of the relay apparatus, the relay apparatus allows data of each application corresponding to the relay service code to be transmitted through the relay apparatus.

The configuration information of the target user includes at least one relay service code, and an identifier of an application corresponding to each of the at least one relay service code. The target relay service code in the first message is a relay service code corresponding to the target application in the configuration information of the target user. For each of the at least one relay service code in the configuration information of the target user, the target user has permission to request to establish, based on an application corresponding to the relay service code, the proximity-based services relay link. In Manner 3-a1, division is performed based on an application level granularity. In a possible implementation, it may be understood that the correspondence between the relay service code and the identifier of the application is applicable to all users. For example, if the relay apparatus allows the data of the target application to be transmitted through the relay apparatus, data of each user in all users of the target application may be allowed to be transmitted through the relay apparatus.

Manner 3-a2: There is a correspondence between the relay apparatus, the relay service code, the identifier of the application, and the identifier of the user. One relay apparatus corresponds to one or more relay service codes, one relay service code may correspond to an identifier of one or more applications, and an identifier of one application corresponds to an identifier of one or more users.

**Table 1 Schematic table of the correspondence between the relay service code, the identifier of the application, and the identifier of the user**

| Identifier of the relay apparatus | Relay service code | Identifier of the application | Identifier of the user |
|---|---|---|---|
| Relay apparatus 1 | Relay service code 1 | Application 1 | User 1 |
| | | | User 2 |
| | | Application 2 | User 3 |
| | Relay service code 2 | Application 3 | User 4 |
| Relay apparatus 2 | Relay service code 2 | Application 3 | User 4 |
| | Relay service code 3 | Application 4 | User 5 |

It can be learned from Table 1 that, in configuration information configured by the network device for the relay apparatus 1 and the relay apparatus 2, the configuration information of the relay apparatus 1 includes the relay service code 1 and the relay service code 2. The configuration information of the relay apparatus 2 includes the relay service code 3. The user 1 and the user 2 correspond to the application 1, the user 1 corresponds to the application 2, and the application 1 and the application 2 correspond to the relay service code 1. There is a correspondence between the user 4, the application 3, and the relay service code 2. There is a correspondence between the application 4, the user 5, and the relay service code 3. Content in Table 1 indicates that the relay apparatus 1 allows data of the application 1 of the user 1 and the user 2 to be transmitted through the relay apparatus 1, and the relay apparatus 1 also allows data of the application 2 of the user 1 and data of the application 3 of the user 4 to be transmitted through the relay apparatus 1. The relay apparatus 2 allows data of the application 4 of the user 5 to be transmitted through the relay apparatus 2. As shown in Table 1, one relay apparatus may correspond to one or more relay service codes, one relay service code may also correspond to one or more relay apparatuses, one relay service code may correspond to one or more applications, and one application may correspond to one or more users.

The configuration information of the relay apparatus includes at least one relay service code corresponding to the identifier of the relay apparatus.

The configuration information of the target user includes at least one relay service code corresponding to the target user, and an identifier of an application corresponding to each of the at least one relay service code. The target relay service code in the first message is a relay service code corresponding to the target application in the configuration information of the target user. For each of the at least one relay service code in the configuration information of the target user, the target user has permission to request to establish, based on an application corresponding to the relay service code, the proximity-based services relay link.

In a possible implementation, in Manner 3-a2, because user level granularity division is further performed, step S403 may alternatively be described as: The relay apparatus determines whether the data of the target application corresponding to the target user is allowed to be transmitted through the relay apparatus. If the data of the target application is allowed to be transmitted through the relay apparatus, step S403 is performed; or if the data of the target application is not allowed to be transmitted through the relay apparatus, the relay apparatus stops sending the first message.

In addition to the descriptions of the several possible implementations of the first condition in Manner 1 to Manner 3, the first condition may further include several cases. For example, the first condition may be whether a current load status of the relay apparatus reaches an upper limit. For another example, the first condition may be whether a radio resource bandwidth currently used by the relay apparatus reaches an upper limit, whether signal strength, of the first message, currently received by the relay apparatus exceeds a signal strength threshold for normal communication that can be performed between the relay apparatus and the first terminal device, or whether a current power of the relay apparatus is greater than a power threshold.

The relay apparatus may determine, based on the locally stored configuration information of the relay apparatus, whether the first condition is met. In another possible implementation, the relay apparatus may send a request to the network device, to verify, from the network device, whether the first condition is met. For example, the relay apparatus knows that the relay service of the target application is provided only for the restricted user. In this case, after receiving another first message, the relay needs to request the network device to verify whether the data corresponding to the target user of the target application has permission to use the relay apparatus, and may send a query request to the network device. The query request carries the identifier of the target application, the identifier of the target user, and the identifier of the relay apparatus.

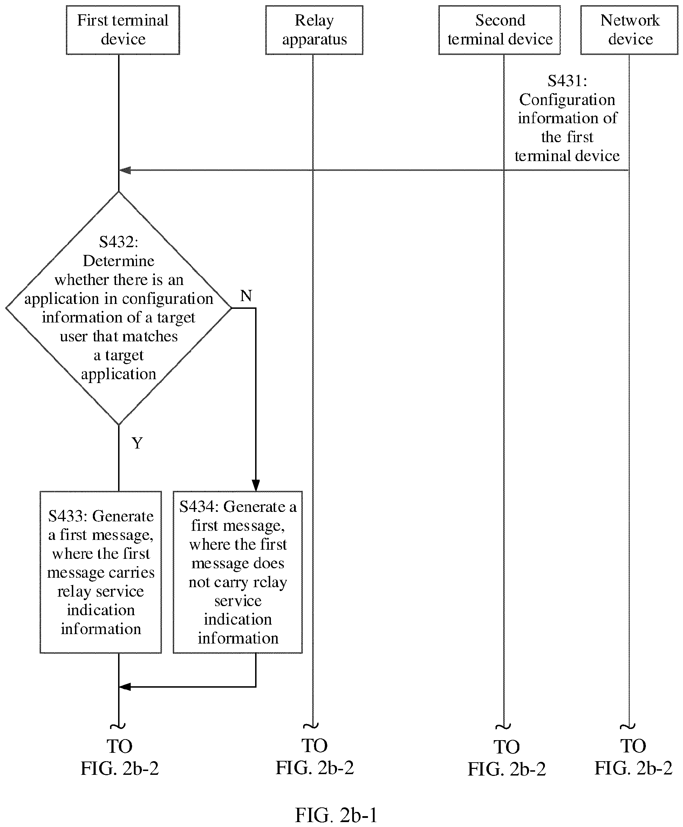

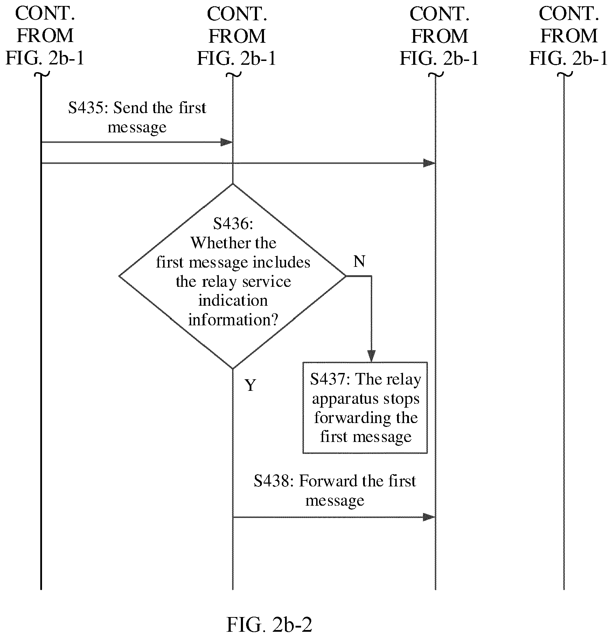

Based on the foregoing content, FIG. 2b-1 and FIG. 2b-2 are an example of a schematic flowchart of a relay link establishment method according to an embodiment of this application. As shown in FIG. 2b-1 and FIG. 2b- 2, the method includes the following steps.

S431: A first terminal device receives configuration information of a target user from a network device.

In this embodiment of this application, the first terminal device may be a first apparatus. The configuration information of the target user is used to indicate an identifier of at least one application. The target user is a user that logs in to a target application running on the first terminal device.

S432: The first terminal device determines whether there is an application in the configuration information of the target user that matches the target application. If there is an application that matches the target application, step S433 is performed; or if there is no application that matches the target application, step S434 is performed.

For an identifier of each application in the identifier of the at least one application in the configuration information of the target user, when the first terminal device needs to transmit data of the target user on the application by using a proximity-based service, the first terminal device has permission to request to establish a proximity-based services relay link. In other words, the first terminal device has permission to request to establish a proximity-based services link based on a relay apparatus.

S433: The first terminal device generates a first message, where the first message carries relay service indication information, and the relay service indication information is used to indicate the first terminal to request to establish the relay link based on the relay apparatus.

In a possible implementation, a value of the relay service indication information is 1. In other words, the relay service indication information is used to indicate the first terminal to request to establish the relay link based on the relay apparatus, only when the value of the relay service indication information is 1.

S434: The first terminal device generates a first message, where the first message does not carry relay service indication information.

Step S434 may alternatively be replaced with: The first terminal device generates the first message, where the first message carries the relay service indication information and is used to indicate the first terminal to request to establish a link that is not based on the relay apparatus. In this embodiment, a value of the relay service indication information may be 0. In other words, when the value of the relay service indication information is 0, the relay service indication information is used to indicate the first terminal not to request to establish a relay link based on the relay apparatus. It may alternatively be described as: When the value of the relay service indication information is 0, the relay service indication information is used to indicate that the first terminal device does not expect to establish a proximity-based services link through the relay apparatus.

S435: The first terminal device sends the first message, where the first message is used to request to establish the proximity-based services link to a second terminal device.

The first message in step S435 may be the discovery parameter broadcast in FIG. 1e, or may be the unicast establishment request in FIG. 1f.

S436: After receiving the first message, the relay apparatus determines whether the first message includes the relay service indication information. If the first message does not include the relay service indication information, step S437 is performed; or if the first message includes the relay service indication information, step S438 is performed.

In step S436, that the relay apparatus determines whether the first message includes the relay service indication information may be replaced with: The relay apparatus determines whether the value of the relay service indication information in the first message is 0. If the value is 0, step S437 is performed; or if the value is not 0 (for example, 1), step S438 is performed.

S437: The relay apparatus stops forwarding the first message.

S438: The relay apparatus forwards the first message.

After step S438, a part of step S405 to step S411 in FIG. 2a-1 and FIG. 2a-2 may be performed. Details are not described herein again.

It can be learned from the implementation shown in FIG. 2b-1 and FIG. 2b-2 that, when the first terminal device determines that the first terminal device does not have permission to request the proximity-based service that is based on the relay apparatus, the generated first message does not carry the relay service indication information, or the value of the relay service indication information is 0. In this case, the relay apparatus does not forward the first message after receiving the first message, so that the second terminal device may receive only the first message from the first terminal device. In this case, the second terminal device can only directly establish the link to the first terminal device, and the connection does not include the relay apparatus.

When the first terminal device determines that the first terminal device has permission to request the proximity-based service that is based on the relay apparatus, the generated first message carries the relay service indication information, and the relay service indication information is used to indicate the first terminal to request to establish the relay link based on the relay apparatus. In this case, the relay apparatus forwards the first message after receiving the first message. If the second terminal device receives the first message from the relay apparatus and the first message from the first terminal device, for the second terminal device, there are two paths for establishing the link to the first terminal device. In a possible implementation, which path is specifically selected may be selected by the second terminal device. For example, the second terminal device may perform selection based on signal strength of the first message from the first terminal device and the first message from the relay apparatus. For example, if the signal strength of the first message from the relay apparatus is strong, the second terminal device chooses to establish the connection to the first terminal device through the relay apparatus, namely, the link structure shown in FIG. 1d. If the signal strength of the first message received from the first terminal device is strong, the second terminal device chooses to directly establish the connection to the first terminal device, that is, stops establishing the connection through the relay apparatus, namely, the link structure shown in FIG. 1c. Optionally, the second terminal device may perform selection based on values of information powers of the first message from the first terminal device and the first message from the relay apparatus.

In a possible implementation, the configuration information of the relay apparatus in the foregoing several manners may be delivered by the network device to the relay apparatus. Further, in step S403, the relay apparatus may determine, with reference to locally stored configuration information, whether data of the target application is allowed to be transmitted through the relay apparatus.

In another possible implementation, the configuration information of the relay apparatus in the foregoing several manners may be placed on a network device side. After the relay apparatus receives first information, the relay apparatus may send a first request to the network device, where the first request includes an identifier of the target application and an identifier of the relay apparatus; and the first request is used to request to verify whether the relay apparatus is allowed to transmit the data of the target application. The network device verifies, based on the configuration information of the relay apparatus, whether the relay apparatus is allowed to transmit the data of the target application, and then returns a first response based on a verification result. Correspondingly, the relay apparatus receives the first response returned by the network device. The first response is used to indicate that the relay apparatus is allowed to transmit the data of the target application, or the first response is used to indicate that the relay apparatus is not allowed to transmit the data of the target application.

In a possible implementation, the first request further includes an identifier of a first user, the first user is a user of the target application of the first terminal device; and the first request is used to request to verify whether the relay apparatus is allowed to transmit the data of the target application corresponding to the first user. The first response is used to indicate that the relay apparatus is allowed to transmit the data of the target application corresponding to the first user, or the first response is used to indicate that the relay apparatus is not allowed to transmit the data of the target application corresponding to the first user.

The foregoing content relates to the configuration information of the relay apparatus and the configuration information of the target user. The configuration information may be manually configured, or may be configured by the network device. The following describes a process of generating the configuration information of the relay apparatus and the configuration information of the target user.

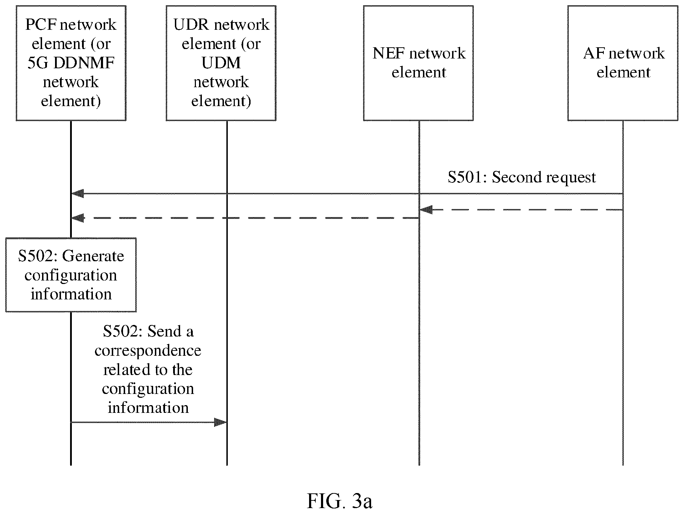

FIG. 3a is an example of a schematic flowchart of a configuration information generation method. In the method, a core network element (which may be referred to as a core network control plane network element, for example, a PCF network element or a 5G DDNMF network element) generates configuration information of a relay apparatus or generates configuration information of a target user at a request of an AF network element. As shown in FIG. 3a, the method includes the following steps.

S501: The AF network element sends a second request to the PCF network element (or the 5G DDNMF network element).

Correspondingly, the PCF network element (or the 5G DDNMF network element) receives the second request from the AF network element.

The second request may be used to request to establish or update the configuration information of the relay apparatus, or may be used to request to establish or update the configuration information of the target user. Specifically, the AF network element may generate the second request based on a service requirement. For example, if the service requirement is to establish the configuration information of the relay apparatus, the second request generated by the AF network element is used to request to establish the configuration information of the relay apparatus.

When the second request is used to request to establish or update the configuration information of the relay apparatus, the second request may carry an identifier of the relay apparatus, may further carry an identifier of an application, and may further carry an identifier of a user. When the core network element has not created the configuration information of the relay apparatus, the second request may be used to request to create the configuration information of the relay apparatus. When the core network element has created the configuration information of the relay apparatus, the second request may be used to request to update the configuration information of the relay apparatus.

When the second request is used to request to establish or update the configuration information of the target user, the second request may carry an identifier of the target user, and may further carry an identifier of an application. When the core network element has not created the configuration information of the target user, the second request may be used to request to create the configuration information of the target user. When the core network element has created the configuration information of the target user, the second request may be used to request to update the configuration information of the target user.

In step S501, there are two possible implementations, which are described in Manner a1 and Manner a2 below.

Manner a1: The AF network element sends the second request to an NEF network element, and the NEF network element forwards the second request to the PCF network element (or the 5G DDNMF network element). In FIG. 3a, dashed lines are used for illustration.

In Manner a1, optionally, the NEF network element may further verify the AF network element, for example, verify whether the AF network element is allowed to use a "relay service code creation or update request" service, which may be determined based on some subscription information of the AF network element or the configuration information. If it is verified that the AF network element is allowed to use the "relay service code creation or update request" service, the NEF network element sends the second request message to the PCF or the 5G DDNMF.

In Manner a1, in a possible implementation, the NEF network element may convert an identifier (for example, an identifier of a second application or an identifier of a second user) in the received second request into internal (identification) information that can be identified inside a core network, and forward the second request in which the identifier is converted. For example, if the second request includes the identifier of the second user, when the identifier of the second user in the second request is a GPSI, the NEF network element may map the GPSI to a subscription permanent identifier (Subscription Permanent Identifier, SUPI); or when the identifier of the second user in the second request is an external user group identifier, the NEF network element may map the external user group identifier to an internal group identifier (Internal Group Identifier).

Manner a2: The AF network element directly sends the second request to the PCF network element (or the 5G DDNMF network element).

In Manner a2, in a possible implementation, if the AF network element is not a third-party network element or has been authenticated by an operator, the AF network element may directly send the second request to the PCF network element (or the 5G DDNMF network element). In this case, an identifier (for example, an identifier of a second application or an identifier of a second user) carried by the AF network element may be an internal identifier (for example, the identifier converted by the NEF network element in Manner a1 described above) that can be identified by the core network element.

Alternatively, in another possible implementation, if each identifier (for example, an identifier of a second application or an identifier of a second user) in the second request is an external identifier, the PCF network element (or the 5G DDNMF network element) obtains a mapping relationship between an external identifier and an internal identifier from a UDM network element, so that the identifier of the second application and the identifier of the second user inside the second request can be converted.

S502: After receiving the second request from the AF network element, the PCF network element (or the 5G DDNMF network element) generates the configuration information, and sends a correspondence related to the configuration information to a UDR network element (or the UDM network element).

When the second request is used to request to establish or update the configuration information of the relay apparatus, the PCF network element (or the 5G DDNMF network element) is configured to generate the configuration information of the relay apparatus. When the second request is used to request to establish or update the configuration information of the target user, the PCF network element (or the 5G DDNMF network element) is configured to generate the configuration information of the target user.

When the second request is used to request to establish or update the configuration information of the relay apparatus, the generated configuration information of the relay apparatus may have the following a plurality of cases.

Case b1: The configuration information of the relay apparatus may include the identifier of the second application. A first application and the second application in this embodiment of this application may be a same application, or may be two different applications. The identifier of the second application in this embodiment of this application is merely used to represent an identifier of an application in the configuration information of the relay apparatus.

In a possible implementation, the second request may carry the identifier of the second application and the identifier of the relay apparatus. The core network element may generate the configuration information of the relay apparatus based on the second request. The configuration information of the relay apparatus may include the identifier of the second application, so that the relay apparatus determines that the relay apparatus can be allowed to transmit data of the second application.

In this embodiment of this application, the configuration information of the relay apparatus may be separately configured for each relay apparatus. In this case, there may be at least two relay apparatuses, and the configuration information of the two relay apparatuses is not completely the same. In another possible implementation, a same set of pieces of configuration information may be configured for all relay apparatuses. In this case, configuration information of any two relay apparatuses is the same. In this embodiment of this application, the PCF network element (or the 5G DDNMF network element) may send, to the UDR network element (or the UDM network element), an identifier, of an application, configured for one relay apparatus, for example, the identifier of the second application mentioned in the foregoing content, so that information on each network element is synchronized. A correspondence between the identifier of the relay apparatus and the identifier of the second application may be sent. Certainly, only the configured identifier of the application may be sent, and the identifier of the relay apparatus is not sent. In this case, the identifier of the application is configured for all relay apparatuses by default, and is oriented to all relay apparatuses. It may also be considered that the configuration information of all relay apparatuses needs to include the identifier of the second application.

In this implementation, the correspondence related to the configuration information includes the correspondence between the identifier of the relay apparatus and the identifier of the second application.

Case b2: The configuration information of the relay apparatus may include the identifier of the second application and the identifier of the second user. A first user and the second user in this embodiment of this application may be a same user, or may be two different users. The identifier of the second user in this embodiment of this application is merely used to represent an identifier of a user in the configuration information of the relay apparatus.

In another possible implementation, the second request may carry the identifier of the second application, the identifier of the second user, and the identifier of the relay apparatus. The core network element may generate the configuration information of the relay apparatus based on the second request. The configuration information of the relay apparatus may include the identifier of the second application and the identifier of the second user, so that the relay apparatus determines that the relay apparatus can be allowed to transmit data of the second user of the second application.

In a possible implementation, if the second request sent by the AF network element includes an identifier of a user (for example, the identifier of the second user), the PCF network element (or the 5G DDNMF network element) may interact with the UDM network element, to verify, by using subscription data of the second user, whether the second user has permission to use a proximity-based service based on the relay apparatus. If it is verified that the second user has permission to use the proximity-based service based on the relay apparatus, the PCF network element (or the 5G DDNMF network element) may generate the configuration information of the relay apparatus based on the second request. If it is verified that the user does not have permission to use the proximity-based service based on the relay apparatus, the PCF network element (or the 5G DDNMF network element) stops generating the configuration information of the relay apparatus based on the second request, and may further feed back a rejection message to the AF network element through the NEF network element, or directly feed back a rejection message to the AF network element. The rejection message may include the identifier of the second user and a rejection reason (where the rejection reason is that subscription information of the second user is not met).

Further, the PCF network element (or the 5G DDNMF network element) may send a correspondence between the identifier of the relay apparatus, the identifier of the second application, and the identifier of the second user to the UDR network element (or the UDM network element), so that information on each network element is synchronized. In this implementation, the correspondence related to the configuration information includes the correspondence between the identifier of the relay apparatus, the identifier of the second application, and the identifier of the second user.

Case b3: The configuration information of the relay apparatus may include a relay service code.

In a possible implementation, the second request may carry the identifier of the second application and the identifier of the relay apparatus. The core network element may generate, based on the second request, the identifier of the second application and a relay service code corresponding to the identifier of the relay apparatus, and further generate the configuration information of the relay apparatus. The configuration information of the relay apparatus may include the relay service code. In this implementation, the second request may also be referred to as a relay service code creation or update request. Further, the PCF network element (or the 5G DDNMF network element) may send a correspondence between the identifier of the relay apparatus, the identifier of the second application, and the relay service code to the UDR network element (or the UDM network element), so that information on each network element is synchronized. In this implementation, the correspondence related to the configuration information includes the correspondence between the identifier of the relay apparatus, the identifier of the second application, and the relay service code.

In a possible implementation, the second request may carry the identifier of the second application, the identifier of the second user, and the identifier of the relay apparatus. The core network element may generate, based on the second request, one relay service code corresponding to the identifier of the second application, the identifier of the second user, and the identifier of the relay apparatus. In other words, there is a correspondence between the generated relay service code and the identifier of the second application, the identifier of the second user, and the identifier of the relay apparatus. Further, the core network element generates the configuration information of the relay apparatus. The configuration information of the relay apparatus may include the relay service code. In a subsequent relay connection establishment procedure, the relay apparatus determines, by using a target relay service code, whether the first terminal device has a right to transmit the data of the target application through the relay apparatus. However, the relay apparatus only forwards a message, and does not necessarily need to use the target application. Therefore, the relay apparatus herein only needs to know specific relay service codes for which the relay apparatus can provide a relay service, and the configuration information of the relay apparatus may include only relay service codes that the relay apparatus can serve. In this way, advantages are as follows: In an aspect, an amount of information can be reduced. In another aspect, user privacy of using the relay service can be protected. When providing the relay service for another user, the relay apparatus can achieve an effect that the identifier of the target application cannot be determined.

Correspondingly, in this implementation, the second request may also be referred to as the relay service code creation or update request. In a possible implementation, whether the second user has permission to use a proximity-based service based on the relay apparatus may be verified based on subscription information of the second user. For a specific verification manner, refer to the related descriptions in Case b2. Details are not described herein again. Further, the PCF network element (or the 5G DDNMF network element) may send the correspondence between the generated relay service code and the identifier of the second application, the identifier of the second user, and the identifier of the relay apparatus to the UDR network element (or the UDM network element), so that information on each network element is synchronized. In this implementation, the correspondence related to the configuration information includes the correspondence between the generated relay service code and the identifier of the second application, the identifier of the second user, and the identifier of the relay apparatus.

In another possible implementation, the second request further carries a second relay service code, and the second relay service code is previously allocated by the core network element to another application and/or user. The second request may request to update an identifier of an application corresponding to the second relay service code (where in this case, the second request further needs to carry the identifier of the application), and/or request to update an identifier of a user corresponding to the second relay service code (where in this case, the second request further needs to carry the identifier of the user). The second request may be used to add an identifier of a corresponding application to the second relay service code, or delete an existing identifier of an application corresponding to the second relay service code, or add an identifier of a corresponding user to the second relay service code, or delete an existing identifier of a user corresponding to the second relay service code.

When the second request is used to request to establish or update the configuration information of the target user, the generated configuration information of the target user may have the following a plurality of cases.

Case c1: The configuration information of the target user may include the identifier of the second application.

In a possible implementation, the second request may carry the identifier of the second application and the identifier of the target user. The core network element may generate the configuration information of the target user based on the second request. The configuration information of the target user may include the identifier of the second application, so that the target user has permission to transmit data of the second application through the relay apparatus, or the target user may request to establish a proximity-based services link based on the relay apparatus when the target user needs to transmit the data of the second application. Further, the PCF network element (or the 5G DDNMF network element) may send a correspondence between the identifier of the target user and the identifier of the second application to the UDR network element (or the UDM network element), so that information on each network element is synchronized. In this implementation, the correspondence related to the configuration information includes the correspondence between the identifier of the target user and the identifier of the second application.

Case c2: The configuration information of the target user may include a relay service code.

In a possible implementation, the second request may carry the identifier of the second application and the identifier of the target user. The core network element may generate, based on the second request, the identifier of the second application and a relay service code corresponding to the identifier of the target user, and further generate the configuration information of the target user. The configuration information of the target user may include the relay service code. In this implementation, the second request may also be referred to as a relay service code creation or update request. Further, the PCF network element (or the 5G DDNMF network element) may send a correspondence between the identifier of the target user, the identifier of the second application, and the relay service code to the UDR network element (or the UDM network element), so that information on each network element is synchronized. In this implementation, the correspondence related to the configuration information includes the correspondence between the identifier of the target user, the identifier of the second application, and the relay service code.

In a possible implementation, the configuration information (for example, the configuration information of the relay apparatus or the configuration information of the target user) generated in this embodiment of this application may correspond to valid duration, and the configuration information may be periodically updated. In a possible implementation, when survival duration of the configuration information is greater than the valid duration, the AF network element may initiate the second request in step S501, to request to update the configuration information. In a possible implementation, updating one piece of configuration information may be updating a relay service code in the configuration information. Alternatively, the UDM network element (or the UDR network element) directly indicates, based on valid duration of one piece of configuration information, the PCF network element (or the 5G DDNMF network element or the AF network element) to initiate a procedure of updating the configuration information. In the procedure of updating the configuration information, the AF network element may initiate the second request, or the PCF network element (or the 5G DDNMF network element) may directly update the configuration information (where in this implementation, the AF network element does not need to initiate the second request).

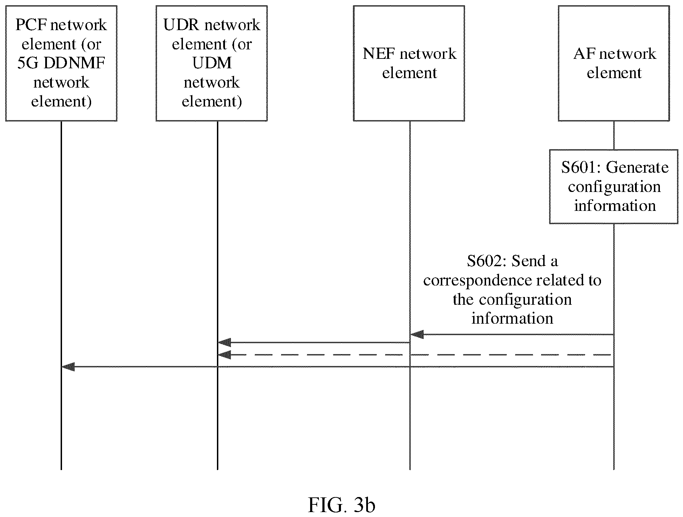

FIG. 3b is an example of a schematic flowchart of a configuration information generation method. In the method, a core network user plane network element (for example, an AF network element or a 5G DDNMF logical function network element deployed on a user plane) generates configuration information of a relay apparatus or generates configuration information of a target user, and sends the configuration information to a core network control plane network element (for example, an NEF network element, a PCF network element, a UDR network element, or a UDM network element). As shown in FIG. 3b, the method includes the following steps.

S601: The AF network element (or the 5G DDNMF logical function network element deployed on the user plane) generates the configuration information.

Specifically, the AF network element may generate the configuration information based on a service requirement. The service requirement may be used to request to establish or update the configuration information of the relay apparatus, or may be used to request to establish or update the configuration information of the target user. For a manner of generating the configuration information by the AF network element, refer to specific content of generating the configuration information by the PCF network element (or the 5G DDNMF network element) in step S502. Details are not described herein again.

S602: The AF network element (or the 5G DDNMF logical function network element deployed on the user plane) sends a correspondence related to the configuration information to the core network control plane network element (for example, the NEF network element, the PCF network element, the UDR network element, or the UDM network element).

In step S602, the AF network element may directly send the correspondence related to the configuration information to the core network control plane network element (for example, the NEF network element, the PCF network element, the UDR network element, or the UDM network element) (where in FIG. 3b, dashed lines are used for illustration), or may send the correspondence through the NEF network element. For related content of this step, refer to the two sending manners in step S501. Details are not described herein again.

For step S602, refer to specific content of the correspondence related to the configuration information sent by the PCF network element (or the 5G DDNMF network element) in step S502. Details are not described herein again.

In a possible implementation, in step S602, when sending the correspondence related to the configuration information to the core network control plane network element, the AF network element may send another piece of indication information, where the indication information is used to indicate whether the correspondence related to the configuration information is newly created or updated.

In another possible implementation, the correspondence related to the configuration information sent by the AF network element to the core network control plane network element may not carry indication information, and the core network control plane network element may determine, based on an existing correspondence related to the configuration information, whether the correspondence related to the configuration information sent by the AF network element is newly created or updated.

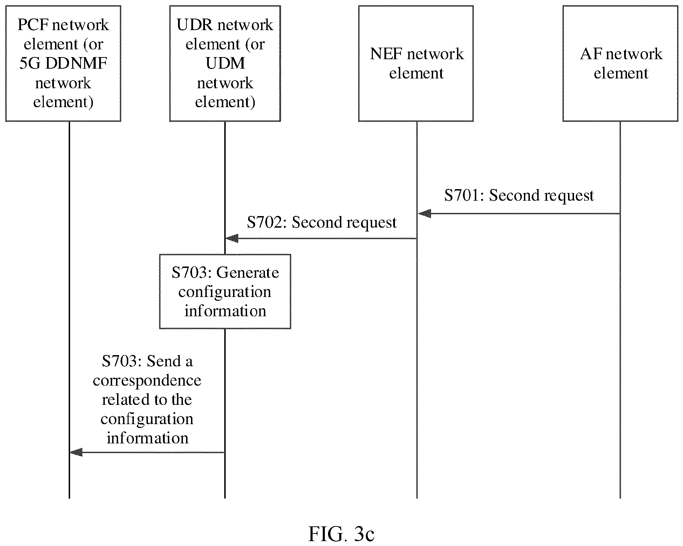

FIG. 3c is an example of a schematic flowchart of a configuration information generation method. In the method, a core network user plane network element (for example, an AF network element or a 5G DDNMF logical function network element deployed on a user plane) generates configuration information of a relay apparatus or generates configuration information of a target user, and sends the configuration information to a core network control plane network element (for example, an NEF network element, a PCF network element, a UDR network element, or a UDM network element). As shown in FIG. 3c, the method includes the following steps.

S701: The AF network element sends a second request to the NEF network element.

Correspondingly, the NEF network element receives the second request from the AF network element.

The second request may be used to request to update the configuration information of the relay apparatus, or may be used to request to update the configuration information of the target user.

S702: The NEF network element forwards the second request to the UDR network element (or the UDM network element).

S703: After receiving the second request from the NEF network element, the UDR network element (or the UDM network element) generates the configuration information, and sends a correspondence related to the configuration information to the PCF network element (or a 5G DDNMF network element).

The UDR network element sends the correspondence related to the configuration information to the PCF network element (or the 5G DDNMF network element), for example, may send the correspondence by using a Nudr_DM_Notify service.

In comparison with the solution in FIG. 3a, a part of execution bodies in FIG. 3c change. For specific content of generation of the configuration information and sending of the correspondence related to the configuration information in FIG. 3c, refer to the related descriptions in FIG. 3a. Details are not described herein again.

In the foregoing content, the configuration information of the relay apparatus and the configuration information of the target user are generated in a network device (where the network device mentioned in this embodiment of this application may be a core network element, the network device in this embodiment of this application may be replaced with the core network element, and the network device or the core network element may be, for example, a PCF network element, a 5G DDNMF network element, or an AF network element). The following provides several possible implementations to describe how to deliver the configuration information of the relay apparatus to the relay apparatus, and how to deliver the configuration information of the target user to a first terminal device.

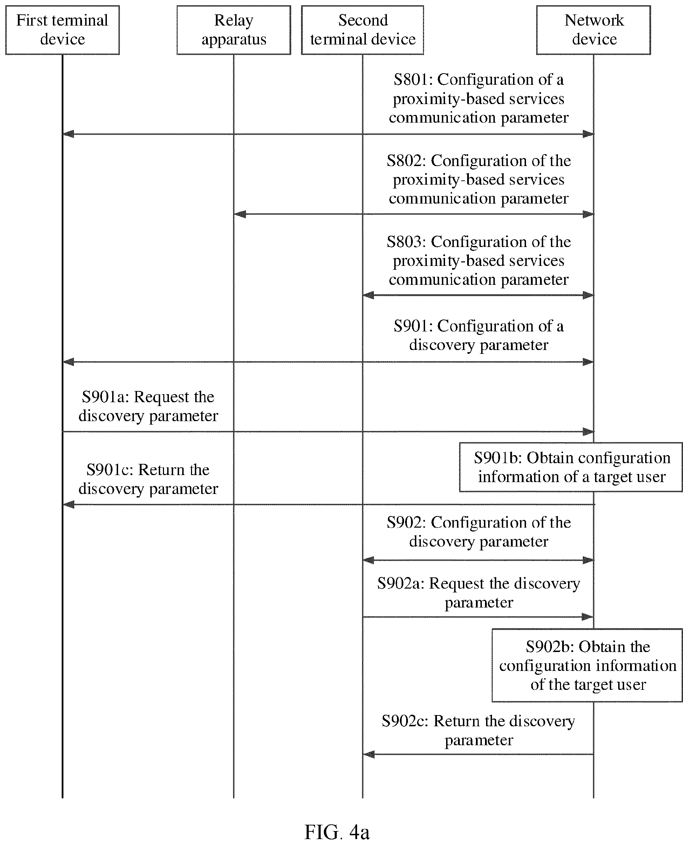

The following FIG. 4a is an example of a communication parameter configuration process and a discovery parameter configuration process. With reference to FIG. 4a, the following describes how to deliver configuration information of a relay apparatus in the communication parameter configuration process and how to deliver a configuration parameter of a target user in the discovery parameter configuration process. In a possible implementation, a network device may deliver the configuration parameter of the relay apparatus to the relay apparatus through a proximity-based services communication parameter configuration process. Alternatively, the network device delivers the configuration parameter of the relay apparatus to the relay apparatus through the discovery parameter configuration process. In another possible implementation, the network device delivers the configuration parameter of the target user to the first terminal device through a proximity-based services communication parameter configuration process. Alternatively, the network device delivers the configuration parameter of the target user to the first terminal device through the discovery parameter configuration process. A manner of delivering the configuration parameter is flexible, and may be selected and used by a person skilled in the art.

FIG. 4a is an example of a schematic flowchart of a communication parameter configuration process and a discovery parameter configuration process method. As shown in FIG. 4a, the method includes the following steps.

S801: A first terminal device obtains a proximity-based services communication parameter from a network device.

It may alternatively be described as: In step S801, the first terminal device obtains configuration information of a target user through a core network element or the network device.

When the target user on the first terminal device registers with a core network or updates a user policy (UE Policy) (where for example, the user policy expires), the target user needs to request latest user policy information from a PCF network element. The latest user policy information may include the proximity-based services communication parameter, for example, the configuration information of the target user, ProSe communication policy information, ProSe communication authorization information, and frequency band information used for ProSe direct communication.

In a possible implementation, the PCF network element may send the configuration information of the target user to the first terminal device with a non-access stratum (non-access stratum, NAS) message through an AMF network element. Alternatively, the PCF network element may send the configuration information of the target user to the first terminal device with a radio resource control (radio resource control, RRC) message through a radio side base station.

Optionally, when registering with the core network, the first terminal device may correspondingly carry a ProSe communication capability. After receiving the information, the AMF network element may select, based on deployment of an operator, the PCF network element to provide a ProSe communication policy for the first terminal device. In addition to triggering providing of the ProSe communication policy in a registration process, when the user policy of the first terminal device needs to be updated, or when subscription data of the first terminal device is updated (where for example, an AF network element, a UDM network element, or a UDR network element updates the configuration information of the target user), a network side network element also actively triggers a step of updating the user policy, and sends the configuration information of the target user to the first terminal device with the user policy.

In a possible implementation, the PCF network element sends the configuration information of the target user to the first terminal device. After the PCF network element obtains the configuration information of the target user of the first terminal device or the PCF network element locally stores the configuration information of the target user, the PCF network element updates the ProSe policy for the first terminal device corresponding to an identifier of the target user provided by the UDM network element or the UDR network element, or sends the configuration information of the target user to all first terminal devices that can use a ProSe relay service. Specifically, the PCF network element may store the configuration information of the target user in a user policy container (UE Policy Container), and send the configuration information of the target user to a second terminal device and a relay apparatus with configuration information of target users of the second terminal device and the relay apparatus through the AMF network element.

In another possible implementation, if the PCF does not locally have the configuration information of the target user (that is, when deploying the PCF network element, the operator may locally deploy the configuration information of the target user in the PCF network element, the UDR network element, or the UDM network element), or when the UDM network element (or the UDR network element) updates the configuration information of the target user (update of the configuration information of the target user), the PCF network element obtains the configuration information of the target user of the first terminal device. Herein, there may be two trigger conditions, as described below.

In the first case, when the PCF network element receives a user policy request of the AMF network element, if there is no related local policy information, the PCF network element requests the configuration information of the target user from the UDR network element (or the UDM network element). Specifically, when requesting the user policy from the PCF network element, the AMF network element carries a user identifier (for example, an SUPI). Then, the PCF network element requests, from the UDR network element (or the UDM network element), a corresponding ProSe communication policy in user subscription information, where the ProSe communication policy includes the configuration information of the target user.

In the second case, when subscription information of the target user changes (where update of the configuration information of the target user may be creation of a new relationship, or change or deletion of an existing relationship), the UDM network element (or the UDR network element) sends changed configuration information of the target user to the PCF network element. Usually, the PCF network element subscribes to a policy update notification service (for example, by using a Nudr_DM _Subscribe service message) from the UDM network element (or the UDR network element), and then the UDM network element (or the UDR network element) updates related subscription information and notifies the PCF network element (for example, by using a Nudr_DM_Notify service message) that subscribes to the related service.

In this embodiment of this application, the configuration information of the target user is applicable to all users, or is applicable to only a part of users. When the configuration information of the target user is applicable to all users, the configuration information of the target user delivered by the network device to the target user may not carry the identifier of the target user. When the configuration information of the target user is applicable only to the target user, or is applicable to some other users, the configuration information of the target user delivered by the network device to the target user may carry the identifier of the target user. In this case, the target user may be referred to as a restricted user.

In a possible implementation, when the configuration information of the target user is applicable only to a part of users, the UDM network element (or the UDR network element) may carry a user identifier (for example, an SUPI) with the configuration information of the target user. If the UDM network element (or the UDR network element) does not include the user identifier in the configuration information of the target user, the PCF network element may send updated configuration information of the target user to all terminal devices that can use the relay service.

S802: The relay apparatus obtains the proximity-based services communication parameter from the network device.

Step S802 is similar to step S801. The relay apparatus obtains, through the network device, the proximity-based services communication parameter corresponding to the relay apparatus. If the relay apparatus is a terminal device, a manner in which the relay apparatus obtains the proximity-based services communication parameter corresponding to the relay apparatus is the same as that in step S801. In addition, when the relay apparatus indicates a ProSe capability of the relay apparatus, a relay service capability may be added. Alternatively, when the PCF network element obtains subscription information of the relay apparatus from the UDM network element (or the UDR network element), the subscription information includes relay capability information of the relay apparatus. In this case, in addition to configuring the proximity-based services communication parameter for the relay apparatus, the PCF network element further configures a relay identifier (Relay ID) for the relay apparatus.

In a possible implementation, the proximity-based services communication parameter of the relay apparatus may include configuration information of the relay apparatus. In another possible implementation, the PCF network element may alternatively send a correspondence related to configuration information of the relay apparatus to the relay apparatus. This does not affect the relay apparatus to provide a relay service for another terminal device.

In this embodiment of this application, an identifier of the relay apparatus may be an identifier independently used by each relay apparatus, and is used for all relay services; or may have a one-to-one or one-tomany binding relationship with a relay service code. For example, for a specific relay apparatus, the PCF network element allocates a relay apparatus "Relay_1" to the relay apparatus for all relay services. Alternatively, the PCF network element allocates, to the relay apparatus, a relay apparatus "Relay _1" to provide a relay service for a user corresponding to a relay service code "RSC_1", and a relay apparatus "Relay_2" to provide relay services for users corresponding to a relay service code "RSC_2" and a relay service code "RSC_3".

In another possible implementation, the PCF network element obtains subscription data of the relay apparatus from the UDM network element (or the UDR network element), and the subscription data of the relay apparatus may include the configuration information of the relay apparatus.

S803: The second terminal device obtains the proximity-based services communication parameter from the network device.

Step S803 is similar to step S801. The second terminal device obtains a configuration of the ProSe communication parameter. When the second terminal device is used as a terminal device requested to establish a proximity-based services link, the second terminal device may not need to obtain the configuration information of the target user.

In FIG. 4a, there is no necessary sequence of steps S801, S802, and S803. For example, step S802 may be performed first, or step S803 may be performed first.

S901: The first terminal device obtains a discovery parameter from the network device.

When the first terminal device serves as an initiator of ProSe communication, the first terminal device may obtain a discovery key parameter from the network device. For the discovery key parameter, refer to the related descriptions in FIG. 1e. Details are not described herein again.

Step S901 may be divided into the following three parts S901a, S901b, and S901c for description, which is not shown in the figure.

S901a: The first terminal device may request the discovery parameter from a 5G DDNMF.

In a possible implementation, the first terminal device may request the discovery parameter from the 5G DDNMF, and carry, with the request message, an application layer user identifier (ProSe APP ID), an application identifier (APP ID), a relay service indication (which indicates that the discovery process may be completed through the relay apparatus, the relay service indication may be used to request to obtain the configuration information of the target user, and a value of the relay service indication may be 1), and the like of the first terminal device. When the configuration information of the target user is applicable to all users, the request message used to request the discovery parameter may not carry the user identifier. When the configuration information of the target user is applicable only to the target user, or is applicable to a part of users other than the target user, the request message used to request the discovery parameter may carry the identifier of the target user. In this case, the target user may be referred to as a restricted user.

In a possible implementation, the 5G DDNMF is deployed on a core network control plane. The first terminal device sends a NAS message to the AMF network element, and carries, with the message, a container (for example, a ProSe Container) used to store the request message of the ProSe discovery parameter. After receiving the NAS message, the AMF network element forwards the container to the 5G DDNMF network element. The forwarded NAS message may carry a core network identifier (an SUPI) of the first terminal device.

In a possible implementation, the 5G DDNMF is deployed on a core network user plane. The first terminal device may send the request message of the ProSe discovery parameter to the 5G DDNMF network element by using a domain name system (Domain Name System, DNS) or by using address information (such as an IP address), of the 5G DDNMF network element, that is preconfigured by the network device for the first terminal device.

S901b: The 5G DDNMF network element obtains the configuration information of the target user from another network device.

In a possible implementation, when the 5G DDNMF network element does not locally have the configuration information of the target user, the 5G DDNMF network element needs to obtain the configuration information of the target user. When the 5G DDNMF network element is deployed on the control plane, the 5G DDNMF network element may obtain the configuration information of the target user from the PCF network element, the UDM network element, or the UDR network element by using an identifier of a target application.

In another possible implementation, the 5G DDNMF network element may obtain the subscription data of the target user from the PCF network element, the UDM network element, or the UDR network element by using the SUPI of the target user, where the subscription data includes the configuration information of the target user. If a restricted mode is used, the UDM network element (or the UDR network element) may further verify whether the first terminal device has permission to transmit data of the target application through the relay apparatus (where the UDM network element (or the UDR network element) stores an identifier of a user that has permission to transmit the data of the target application through the relay apparatus). During specific implementation, the 5G DDNMF network element may not directly obtain the SUPI of the target user, and the identifier of the target user sent by the first terminal device to the 5G DDNMF network element may be an application identifier (or a ProSe APP ID, for example, may be a WeChat^{™} account). In this case, the 5G DDNMF network element needs to obtain locally preset information (for example, a correspondence between the WeChat^{™} account and the SUPI), or determine the SUPI of the target user in the PCF network element (or the UDM network element or the UDR network element).

In another possible implementation, if the AMF network element does not carry the SUPI of the target user with the forwarded message, the 5G DDNMF network element may carry an application layer user identifier (a ProSe APP ID) of the target user to obtain the subscription data of the target user from the UDM network element (or the UDR network element), where the subscription data includes the configuration information of the target user. If a restricted mode is used, the UDM network element (or the UDR network element) may further verify whether the first terminal device has permission to transmit data of the target application through the relay apparatus (where the UDM network element (or the UDR network element) stores an identifier of a user that has permission to transmit the data of the target application through the relay apparatus).

In another possible implementation, if the 5G DDNMF network element is deployed on the user plane, the 5G DDNMF network element may request the configuration information of the target user from the AF network element. If the first terminal device carries a restricted mode indication, the 5G DDNMF network element may request, from an application server (the AF network element) corresponding to the APP ID, to verify whether an application layer identifier (for example, a ProSe APP ID) of the first terminal device is authorized for using the application. If there is a communication interface between the 5G DDNMF on the user plane and a control plane network element, the 5G DDNMF network element may carry the identifier of the target application to obtain the configuration information of the target user from the PCF network element or the UDM network element (or the UDR network element), and carry the application layer identifier and the APP ID of the first terminal device to obtain the restricted permission from the UDM network element (or the UDR network element).

S901c: The 5G DDNMF returns the discovery parameter to the first terminal device.

The 5G DDNMF network element generates a corresponding ProSe APP Code based on the application layer user identifier of the target user, and sends the ProSe APP Code and the configuration information of the target user to the first terminal device.

Similarly, if the 5G DDNMF is a control plane network element, the 5G DDNMF network element may place the ProSe APP Code and the configuration information of the target user in the container and send the container to the AMF network element, and the AMF network element sends the container to the first terminal device by using the NAS message. If the 5G DDNMF network element is a user plane network element, the 5G DDNMF network element may send the ProSe APP Code and the configuration information of the target user to the first terminal device by using a user plane message (for example, in a form of an IP data packet).

S902: The second terminal device obtains the discovery parameter from the network device.

When the second terminal device serves as a requested service party of ProSe communication, the second terminal device may obtain a discovery filtering parameter from the network device. For the discovery filtering parameter, refer to the related descriptions in FIG. 1e. Details are not described herein again.

Step S902 may be divided into the following three parts S902a, S902b, and S902c for description, which is not shown in the figure.

S902a: The second terminal device applies to the 5G DDNMF for the discovery parameter.

The discovery parameter requested by the second terminal device is a ProSe APP Code, of another terminal device, that the second terminal device expects to monitor, or a filter, and the filter includes ProSe APP Codes of other terminal devices that the second terminal device expects to monitor. An application layer identifier, of the another terminal device, that the second terminal device expects to monitor may be notified by an application layer of the second terminal device to the second terminal device. Therefore, the request message, of the discovery parameter, sent by the second terminal device to the 5G DDNMF network element herein includes an application layer user identifier (ProSe APP ID(s)) of the another terminal device, an APP ID, and a restricted mode indication (where the restricted mode indication is optional, and is used to indicate that the discovery process is used only for a part of users whose applications are restricted).

A difference of S902a from S901a is that in step S901a, the relay service indication (which indicates that the discovery process may be completed through the relay apparatus and is used to request the configuration information of the target user) carried by the first terminal device is mandatory. A function of the configuration information of the target user is to enable the relay apparatus to authenticate whether data of the target user of the target application can be transmitted through the relay apparatus. That is, the configuration information is a parameter at an application level granularity. When the first terminal device requests the relay service for the first time in a subsequent step, the relay apparatus performs authorization verification on the target application by using the configuration information of the relay apparatus. Based on this, when establishing a connection to the first terminal device through a same relay apparatus, the second terminal device does not need to perform authorization verification on the target application again.

S902b: The 5G DDNMF network element obtains the ProSe APP Code corresponding to the application layer user identifier of the another terminal device indicated by the second terminal device. For the restricted mode, the 5G DDNMF network element determines whether the second terminal device and the another terminal device indicated by the second terminal device are in a list of restricted users of the application server.

S902c: The 5G DDNMF network element sends, to the second terminal device, the obtained ProSe APP Code corresponding to the application layer user identifier of the another terminal device indicated by the second terminal device.

There is no necessary sequence of steps S901 and S902. For example, step S902 may be performed first, or step S901 may be performed first.

After step S902, the solution in step S401 to step S411 shown in FIG. 2a-1 and FIG. 2a-2 may be performed, or the solution in step S432 to step S438 shown in FIG. 2b-1 and FIG. 2b-2 may be performed.

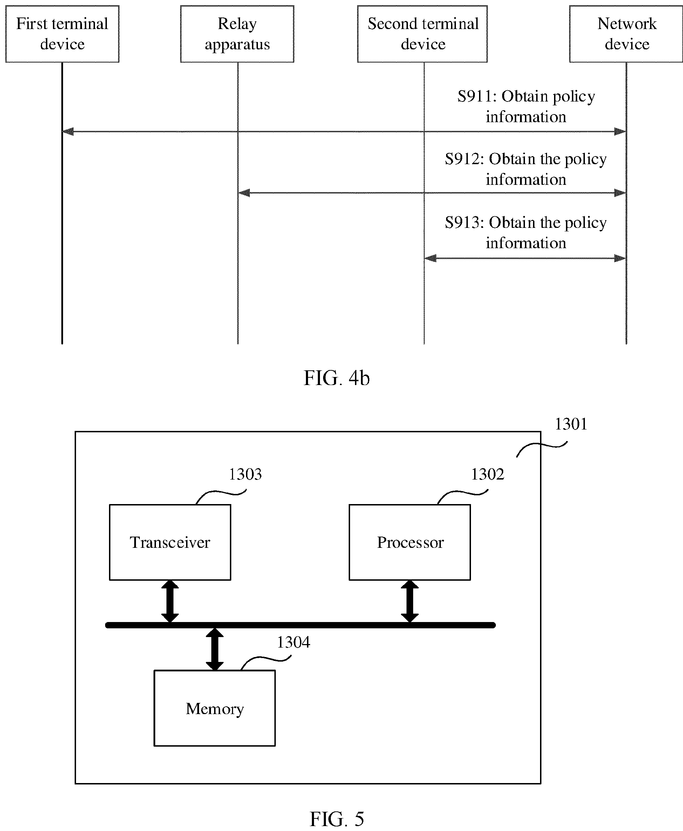

The following FIG. 4b is an example of a policy information obtaining process. With reference to FIG. 4b, the following describes how to deliver configuration information of a relay apparatus in the policy information obtaining process, and how to deliver a configuration parameter of a target user in the policy information obtaining process.

FIG. 4b is an example of a schematic flowchart of a method of a policy information obtaining process. As shown in FIG. 4b, the method is based on the foregoing steps.

S911: A first terminal device obtains proximity-based services policy information from a network device.

S912: A relay apparatus obtains the proximity-based services policy information from the network device.

S913: A second terminal device obtains the proximity-based services policy information from the network device.

For steps S911, S912, and S913, refer to the foregoing communication parameter obtaining process in FIG. 4a. Details are not described herein again. There is no necessary sequence of steps S911, S912, and S913. For example, step S912 may be performed first, or step S913 may be performed first.

After step S913, the solution in step S401 to step S411 shown in FIG. 2a-1 and FIG. 2a-2 may be performed, or the solution in step S432 to step S438 shown in FIG. 2b-1 and FIG. 2b-2 may be performed.

In addition to the foregoing manner, there is another possible implementation. The network device delivers configuration information of the relay apparatus to an AF network element, and the AF network element delivers the configuration information of the relay apparatus to the relay apparatus. The network device delivers configuration information of a target user to the AF network element, and the AF network element delivers the configuration information of the target user to the first terminal device.

In a possible implementation, the network device delivers the configuration information of the relay apparatus to the AF network element, and then the AF network element sends the configuration information of the relay apparatus to the relay apparatus. For example, the AF network element may send the configuration information of the relay apparatus to the relay apparatus by using a user plane message. In this implementation, the relay apparatus may be a terminal device. The relay apparatus establishes a connection (for example, a protocol data unit (Protocol Data Unit, PDU) session) to a UPF network element and the AF network element through a base station, and the AF sends the configuration information of the relay apparatus to the relay apparatus.

In a possible implementation, a PCF network element (or a 5G DDNMF network element) may directly send the configuration information to the AF network element. The AF network element in this case may be an AF network element deployed or authenticated by an operator. In another possible implementation, the PCF network element (or the 5G DDNMF network element) first sends the configuration information to an NEF network element, and then the NEF network element forwards the configuration information to the AF network element.

In a possible implementation, the network device delivers the configuration information of the target user to the AF network element, and then the AF network element sends the configuration information of the target user to the first terminal device. For example, the AF network element may send the configuration information of the target user to the first terminal device by using a user plane message. In this implementation, the first terminal device may be a terminal device. The first terminal device establishes a connection (for example, a protocol data unit (Protocol Data Unit, PDU) session) to a UPF network element and the AF network element through a base station, and the AF sends the configuration information of the target user to the first terminal device.

In a possible implementation, a PCF network element (or a 5G DDNMF network element) may directly send the configuration information to the AF network element. The AF network element in this case may be an AF network element deployed or authenticated by an operator. In another possible implementation, the PCF network element (or the 5G DDNMF network element) first sends the configuration information to an NEF network element, and then the NEF network element forwards the configuration information to the AF network element.

It should be noted that, names of the foregoing messages are merely examples. With evolution of communication technologies, the name of any foregoing message may change. However, regardless of how the names of the messages change, provided that meanings of the messages are the same as those of the messages in this application, the messages fall within the protection scope of this application.

The solutions provided in this application are described above mainly from a perspective of interaction between network elements. It may be understood that, to implement the foregoing functions, each network element includes a corresponding hardware structure and/or software module for executing each function. A person skilled in the art should be quite easily aware that, in combination with the examples described in embodiments disclosed in this specification, units and algorithm steps can be implemented by hardware or a combination of hardware and computer software in the present invention. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

According to the foregoing methods, FIG. 5 is a schematic diagram of a structure of a communication apparatus according to an embodiment of this application. As shown in FIG. 5, the communication apparatus may be a terminal device (for example, the foregoing first terminal device, the foregoing first apparatus, or the foregoing second terminal device), a relay apparatus, or a network device; or may be a chip or a circuit, for example, a chip or a circuit that may be disposed in the terminal device, or for another example, a chip or a circuit that may be disposed in the network device. The relay apparatus may be a terminal device, or may be a network device.

Further, the communication apparatus 1301 may further include a bus system. A processor 1302, a memory 1304, and a transceiver 1303 may be connected through the bus system.

It should be understood that the processor 1302 may be a chip. For example, the processor 1302 may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a micro controller (micro controller unit, MCU), a programmable logic device (programmable logic device, PLD), or another integrated chip.

In an implementation process, steps in the foregoing methods can be implemented through an integrated logical circuit of hardware in the processor 1302, or by using instructions in a form of software. The steps of the methods disclosed with reference to embodiments of this application may be directly performed and completed by a hardware processor, or may be performed and completed by using a combination of hardware and software modules in the processor 1302. The software module may be located in a mature storage medium in the art, such as a random access memory, a flash memory, a read-only memory, a programmable read-only memory, an electrically erasable programmable memory, or a register. The storage medium is located in the memory 1304, and the processor 1302 reads information in the memory 1304 and completes the steps of the foregoing methods in combination with hardware of the processor 1302.

It should be noted that, the processor 1302 in this embodiment of this application may be an integrated circuit chip, and has a signal processing capability. In an implementation process, steps in the foregoing method embodiments can be implemented through an integrated logical circuit of hardware in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor.

It may be understood that the memory 1304 in this embodiment of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

When the communication apparatus 1301 corresponds to the relay apparatus in the foregoing methods, the communication apparatus may include a processor 1302, a transceiver 1303, and a memory 1304. The memory 1304 is configured to store instructions, and the processor 1302 is configured to execute the instructions stored in the memory 1304, to implement a related solution of the relay apparatus in any one or more of the corresponding methods shown in FIG. 2a-1 and FIG. 2a-2 to FIG. 4b.

When the communication apparatus 1301 is the foregoing relay apparatus, the transceiver 1303 is configured to receive a first message from a first terminal device, where the first message includes first indication information and relay service indication information, the first indication information is used to indicate an identifier of a target application, and the relay service indication information is used to indicate to request to establish a relay link. The processor 1302 is configured to: send the first message when the relay apparatus determines that data of the target application is allowed to be transmitted through the relay apparatus; and/or stop sending the first message when the relay apparatus determines that the data of the target application is not allowed to be transmitted through the relay apparatus.

When the communication apparatus 1301 is the foregoing relay apparatus, in a possible implementation, the processor 1302 is specifically configured to: allow the data of the target application to be transmitted through the relay apparatus when determining that the following condition is met: the identifier of the target application matches an identifier of a first application.

When the communication apparatus 1301 is the foregoing relay apparatus, in a possible implementation, the transceiver 1303 is further configured to receive configuration information of the relay apparatus from a network device, where the configuration information of the relay apparatus includes an identifier of at least one application, and the identifier of the first application is one of the identifier of the at least one application; and the relay apparatus allows data of each of the at least one application to be transmitted through the relay apparatus.

When the communication apparatus 1301 is the relay apparatus, in a possible implementation, the first indication information is further used to indicate an identifier of a target user, and the target user is a user of the target application of the first terminal device; and the processor 1302 is specifically configured to: allow the data of the target application to be transmitted through the relay apparatus when determining that the following conditions are met: the identifier of the target application matches an identifier of a first application; and the identifier of the target user matches an identifier of a first user.

When the communication apparatus 1301 is the foregoing relay apparatus, in a possible implementation, the transceiver 1303 is further configured to receive configuration information of the relay apparatus from a network device, where the configuration information of the relay apparatus includes an identifier of at least one application and an identifier of a user corresponding to an identifier of each application in the identifier of the at least one application; the identifier of the first application is one of the identifier of the at least one application, and the first user is one of an identifier of a user corresponding to the identifier of the first application; and for each of the at least one application, the relay apparatus allows data of each user corresponding to the application to be transmitted through the relay apparatus.

When the communication apparatus 1301 is the foregoing relay apparatus, in a possible implementation, the first indication information includes a target relay service code; and the processor 1302 is specifically configured to allow the data of the target application to be transmitted through the relay apparatus: when determining that the following condition is met: the target relay service code matches a first relay service code.

When the communication apparatus 1301 is the foregoing relay apparatus, in a possible implementation, the transceiver 1303 is further configured to receive configuration information of the relay apparatus from a network device, where the configuration information of the relay apparatus includes at least one relay service code; the first relay service code is one of the at least one relay service code; each of the at least one relay service code corresponds to an identifier of at least one application; and the relay apparatus allows data of each of the at least one application corresponding to each of the at least one relay service code to be transmitted through the relay apparatus.

When the communication apparatus 1301 is the foregoing relay apparatus, in a possible implementation, for an identifier of each application in the identifier of the at least one application corresponding to each of the at least one relay service code, the identifier of the application corresponds to an identifier of at least one user; and for the identifier of each application in the identifier of the at least one application corresponding to each of the at least one relay service code, the relay apparatus allows data of each user in the identifier of the at least one user corresponding to the application to be transmitted through the relay apparatus.

When the communication apparatus 1301 is the relay apparatus, in a possible implementation, the transceiver 1303 is further configured to: send a first request to a network device, where the first request includes the identifier of the target application and an identifier of the relay apparatus; and the first request is used to request to verify whether the relay apparatus is allowed to transmit the data of the target application; and receive a first response returned by the network device, where the first response is used to indicate that the relay apparatus is allowed to transmit the data of the target application, or the first response is used to indicate that the relay apparatus is not allowed to transmit the data of the target application.

When the communication apparatus 1301 is the relay apparatus, in a possible implementation, the first request further includes an identifier of a target user, and the target user is a user of the target application of the first terminal device; the first request is used to request to verify whether the relay apparatus is allowed to transmit data of the target application corresponding to the target user; and the first response is used to indicate that the relay apparatus is allowed to transmit the data of the target application corresponding to the target user, or the first response is used to indicate that the relay apparatus is not allowed to transmit the data of the target application corresponding to the target user.

When the communication apparatus 1301 corresponds to the first apparatus (or the first terminal device) in the foregoing methods, the communication apparatus may include a processor 1302, a transceiver 1303, and a memory 1304. The memory 1304 is configured to store instructions, and the processor 1302 is configured to execute the instructions stored in the memory 1304, to implement a related solution of the first apparatus (or the first terminal device) in one or more of the corresponding methods shown in FIG. 2a-1 and FIG. 2a-2 to FIG. 4b.

When the communication apparatus 1301 is the first apparatus (or the first terminal device), the processor 1302 is configured to generate a first message, where the first message includes first indication information and relay service indication information, the first indication information is used to indicate an identifier of a target application, and the relay service indication information is used to indicate to request to establish a relay link; and the transceiver 1303 is configured to send the first message.

When the communication apparatus 1301 is the first apparatus (or the first terminal device), in a possible implementation, the first indication information includes a target relay service code.

When the communication apparatus 1301 is the first apparatus (or the first terminal device), in a possible implementation, the transceiver 1303 is further configured to receive configuration information of a target user from a network device, where the configuration information of the target user includes at least one relay service code and an identifier of at least one application corresponding to each of the at least one relay service code; and the target relay service code is a relay service code corresponding to the identifier of the target application in the configuration information of the target user.

When the communication apparatus 1301 is the first apparatus (or the first terminal device), in a possible implementation, the configuration information of the target user includes at least one relay service code corresponding to the target user and an identifier of at least one application corresponding to each of the at least one relay service code; and the target user is a user of the target application of the first terminal device.

When the communication apparatus 1301 corresponds to the network device in the foregoing methods, the communication apparatus may include a processor 1302, a transceiver 1303, and a memory 1304. The memory 1304 is configured to store instructions, and the processor 1302 is configured to execute the instructions stored in the memory 1304, to implement a related solution of the network device in any one or more of the corresponding methods shown in FIG. 2a-1 and FIG. 2a-2 to FIG. 4b.

When the communication apparatus 1301 is the foregoing network device, the processor 1302 is configured to generate configuration information of a relay apparatus according to a preset first rule; and the transceiver 1303 is configured to send the configuration information of the relay apparatus to the relay apparatus, where the configuration information of the relay apparatus includes indication information used to indicate an identifier of at least one application; and the relay apparatus allows data of each of the at least one application to be transmitted through the relay apparatus.

When the communication apparatus 1301 is the foregoing network device, in a possible implementation, the processor 1302 is further configured to generate configuration information of a target user according to a preset second rule, where the target user is a user of the target application of the first terminal device; and the transceiver 1303 is further configured to send the configuration information of the target user to the first terminal device, where the configuration information of the target user includes at least one relay service code corresponding to the target user and an identifier of each application in the identifier of the at least one application corresponding to each of the at least one relay service code, and the identifier of the application corresponds to an identifier of at least one user.

When the communication apparatus 1301 corresponds to the first apparatus (or the first terminal device) in the foregoing methods, the communication apparatus may include a processor 1302, a transceiver 1303, and a memory 1304. The memory 1304 is configured to store instructions, and the processor 1302 is configured to execute the instructions stored in the memory 1304, to implement a related solution of the first apparatus (or the first terminal device) in one or more of the corresponding methods shown in FIG. 2a-1 and FIG. 2a-2 to FIG. 4b.

When the communication apparatus 1301 is the first apparatus (or the first terminal device), the transceiver 1303 is configured to: receive configuration information of a target user, where the configuration information of the target user is used to indicate an identifier of at least one application; and send a first message, where the first message is used to request to establish a proximity-based services link to a second terminal device; and the processor 1302 is configured to: include relay service indication information in the first message when a target application matches one of the at least one application; and/or include no relay service indication information in the first message when the target application does not match any of the at least one application, where the relay service indication information is used to indicate the first terminal to request to establish a relay link based on a relay apparatus.

When the communication apparatus 1301 is the first apparatus (or the first terminal device), in a possible implementation, the processor 1302 is further configured to establish the proximity-based services link to the second terminal device through the relay apparatus; and the transceiver 1303 is further configured to report a second message to a network device, where the second message carries an identifier of the target application, and the second message is used to enable the network device to verify whether the relay apparatus is allowed to transmit data of the target application corresponding to the target user.

When the communication apparatus 1301 corresponds to the network device in the foregoing methods, the communication apparatus may include a processor 1302, a transceiver 1303, and a memory 1304. The memory 1304 is configured to store instructions, and the processor 1302 is configured to execute the instructions stored in the memory 1304, to implement a related solution of the network device in any one or more of the corresponding methods shown in FIG. 2a-1 and FIG. 2a-2 to FIG. 4b.

When the communication apparatus 1301 is the foregoing network device, the processor 1302 is configured to generate configuration information of a target user according to a preset second rule; and the transceiver 1303 is configured to send the configuration information of the target user to a first terminal device, where the target user is a user of a target application of the first terminal device; the configuration information of the target user includes an identifier of at least one application; and data of the target user of each of the at least one application is allowed to be transmitted through a relay apparatus.

For concepts (for example, configuration information of a relay apparatus and configuration information of a target user), explanations, detailed descriptions, and other steps of the communication apparatus that are related to the technical solutions provided in embodiments of this application, refer to the descriptions of the content in the foregoing methods or other embodiments. Details are not described herein again.

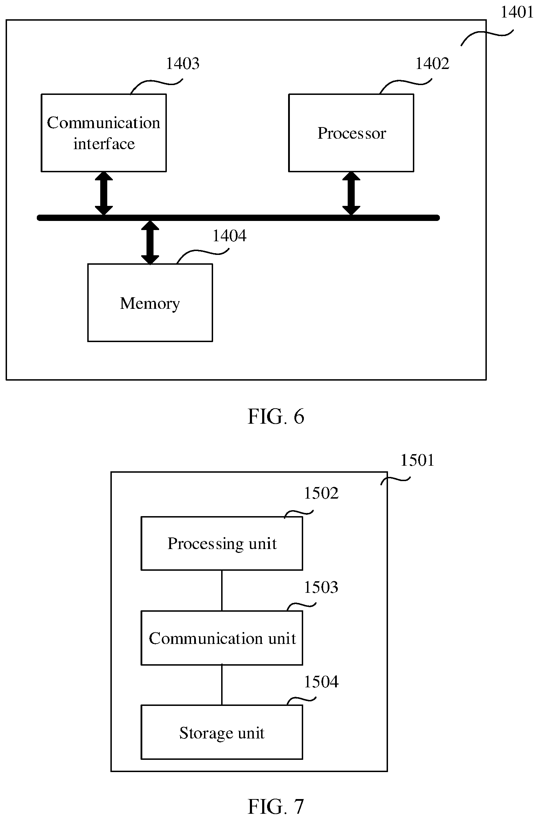

According to the foregoing methods, FIG. 6 is a schematic diagram of a structure of a communication apparatus according to an embodiment of this application. As shown in FIG. 6, the communication apparatus 1401 may include a communication interface 1403, a processor 1402, and a memory 1404. The communication interface 1403 is configured to input and/or output information. The processor 1402 is configured to execute a computer program or instructions, so that the communication apparatus 1401 implements the method on a terminal device side in the related solutions in FIG. 2a-1 and FIG. 2a-2 to FIG. 4b, or the communication apparatus 1401 implements the method on a relay apparatus side in the related solutions in FIG. 2a-1 and FIG. 2a-2 to FIG. 4b, or the communication apparatus 1401 implements the method on a network device side in the related solutions in FIG. 2a-1 and FIG. 2a-2 to FIG. 4b. In this embodiment of this application, the communication interface 1403 may implement the solution implemented by the transceiver 1303 in FIG. 5, the processor 1402 may implement the solution implemented by the processor 1302 in FIG. 5, and the memory 1404 may implement the solution implemented by the memory 1304 in FIG. 5. Details are not described herein again.

According to the foregoing embodiments and a same concept, FIG. 7 is a schematic diagram of a communication apparatus according to an embodiment of this application. As shown in FIG. 7, the communication apparatus 1501 may be a terminal device (for example, the foregoing first terminal device, the foregoing first apparatus, or the foregoing second terminal device), a relay apparatus, or a network device; or may be a chip or a circuit, for example, a chip or a circuit that may be disposed in the terminal device, or for another example, a chip or a circuit that may be disposed in the network device. The relay apparatus may be a terminal device, or may be a network device.

The processing unit 1502 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor. The storage unit 1504 may be a memory. The communication unit 1503 is an interface circuit of the apparatus, and is configured to receive a signal from another apparatus. For example, when the apparatus is implemented in a form of a chip, the communication unit 1503 is an interface circuit used by the chip to receive a signal from another chip or apparatus, or is an interface circuit used by the chip to send a signal to another chip or apparatus.

The communication apparatus 1501 may be a terminal device (for example, the foregoing first terminal device, the foregoing first apparatus, or the foregoing second terminal device), a relay apparatus, or a network device in any one of the foregoing embodiments; or may be a chip or a circuit, for example, a chip or a circuit that may be disposed in the terminal device, or for another example, a chip or a circuit that may be disposed in the network device. The relay apparatus may be a terminal device, or may be a network device. For example, when the communication apparatus 1501 is the terminal device, the relay apparatus, or the network device, the processing unit 1502 may be, for example, a processor, and the communication unit 1503 may be, for example, a transceiver. Optionally, the transceiver may include a radio frequency circuit, and the storage unit may be, for example, a memory. For example, when the communication apparatus 1501 is the chip used in the terminal device, the relay apparatus, or the network device, the processing unit 1502 may be, for example, a processor, and the communication unit 1503 may be, for example, an input/output interface, a pin, or a circuit. The processing unit 1502 may execute computer-executable instructions stored in a storage unit. Optionally, the storage unit is a storage unit in the chip, such as a register or a cache. Alternatively, the storage unit may be a storage unit that is in the session management network element and that is located outside the chip, for example, a read-only memory (read-only memory, ROM) or another type of static storage device that can store static information and instructions, or a random access memory (random access memory, RAM).

When the communication apparatus 1501 is the foregoing relay apparatus, the communication unit 1503 is configured to receive a first message from a first terminal device, where the first message includes first indication information and relay service indication information, the first indication information is used to indicate an identifier of a target application, and the relay service indication information is used to indicate to request to establish a relay link. The processing unit 1502 is configured to: send the first message when the relay apparatus determines that data of the target application is allowed to be transmitted through the relay apparatus; and/or stop sending the first message when the relay apparatus determines that the data of the target application is not allowed to be transmitted through the relay apparatus.

When the communication apparatus 1501 is the first apparatus (or the first terminal device), the processing unit 1502 is configured to generate a first message, where the first message includes first indication information and relay service indication information, the first indication information is used to indicate an identifier of a target application, and the relay service indication information is used to indicate to request to establish a relay link; and the communication unit 1503 is configured to send the first message.

When the communication apparatus 1501 is the foregoing network device, the processing unit 1502 is configured to generate configuration information of a relay apparatus according to a preset first rule; and the communication unit 1503 is configured to send the configuration information of the relay apparatus to the relay apparatus, where the configuration information of the relay apparatus includes indication information used to indicate an identifier of at least one application; and the relay apparatus allows data of each of the at least one application to be transmitted through the relay apparatus.

When the communication apparatus 1501 is the first apparatus (or the first terminal device), the communication unit 1503 is configured to: receive configuration information of a target user, where the configuration information of the target user is used to indicate an identifier of at least one application; and send a first message, where the first message is used to request to establish a proximity-based services link to a second terminal device; and the processing unit 1502 is configured to: include relay service indication information in the first message when a target application matches one of the at least one application; and/or include no relay service indication information in the first message when the target application does not match any of the at least one application, where the relay service indication information is used to indicate the first terminal to request to establish a relay link based on a relay apparatus.

When the communication apparatus 1501 is the foregoing network device, the processing unit 1502 is configured to generate configuration information of a target user according to a preset second rule; and the communication unit 1503 is configured to send the configuration information of the target user to a first terminal device, where the target user is a user of a target application of the first terminal device; the configuration information of the target user includes an identifier of at least one application; and data of the target user of each of the at least one application is allowed to be transmitted through a relay apparatus.

For concepts, explanations, detailed descriptions, and other steps of the communication apparatus that are related to the technical solutions provided in embodiments of this application, refer to the descriptions of the content in the foregoing methods or other embodiments. Details are not described herein again.

It may be understood that for functions of the units in the communication apparatus 1501, refer to implementation of a corresponding method embodiment. Details are not described herein again.

It should be understood that division into units of the communication apparatus is merely logical function division. During actual implementation, all or some of the units may be integrated into a physical entity, or may be physically separated. In this embodiment of this application, the communication unit 1503 may be implemented by the transceiver 1303 in FIG. 5, and the processing unit 1502 may be implemented by the processor 1302 in FIG. 5.

According to the methods provided in embodiments of this application, this application further provides a computer program product. The computer program product includes computer program code or instructions. When the computer program code or the instructions is/are run on a computer, the computer is enabled to perform the method according to any one of the embodiments shown in FIG. 2a-1 and FIG. 2a-2 to FIG. 4b.

According to the methods provided in embodiments of this application, this application further provides a computer-readable storage medium. The computer-readable storage medium stores program code. When the program code is run on a computer, the computer is enabled to perform the method according to any one of the embodiments shown in FIG. 2a-1 and FIG. 2a-2 to FIG. 4b.

According to the methods provided in embodiments of this application, this application further provides a system. The system includes the foregoing one or more terminal devices, one or more relay apparatuses, and one or more network devices.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

The network device and the terminal device in the foregoing apparatus embodiments correspond to the network device or the terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, refer to the corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process running on a processor, a processor, an object, an executable file, an execution thread, a program, and/or a computer. As illustrated by using figures, both a computing device and an application running on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system and/or a distributed system, and/or across a network such as the Internet interacting with other systems by using the signal).

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate components may or may not be physically separate, and components displayed as units may or may not be physical units, in other words, may be located at one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A relay link establishment method, comprising:
receiving, by a relay apparatus, a first message from a first terminal device, wherein the first message comprises first indication information and relay service indication information, the first indication information is used to indicate an identifier of a target application, and the relay service indication information is used to indicate to request to establish a relay link; and
sending the first message when the relay apparatus determines that data of the target application is allowed to be transmitted through the relay apparatus; and/or stopping sending the first message when the relay apparatus determines that the data of the target application is not allowed to be transmitted through the relay apparatus.

2. The method according to claim 1, wherein the relay apparatus determines that the data of the target application is allowed to be transmitted through the relay apparatus when determining that the following condition is met:
the identifier of the target application matches an identifier of a first application.

3. The method according to claim 2, wherein before the receiving, by a relay apparatus, a first message from a first terminal device, the method further comprises:
receiving, by the relay apparatus, configuration information of the relay apparatus from a network device, wherein
the configuration information of the relay apparatus comprises an identifier of at least one application, and the identifier of the first application is one of the identifier of the at least one application; and the relay apparatus allows data of each of the at least one application to be transmitted through the relay apparatus.

4. The method according to claim 1, wherein the first indication information is further used to indicate an identifier of a target user, and the target user is a user of the target application of the first terminal device; and
the relay apparatus determines that the data of the target application is allowed to be transmitted through the relay apparatus when determining that the following conditions are met:
the identifier of the target application matches an identifier of a first application; and
the identifier of the target user matches an identifier of a first user.

5. The method according to claim 4, wherein before the receiving, by a relay apparatus, a first message from a first terminal device, the method further comprises:
receiving, by the relay apparatus, configuration information of the relay apparatus from a network device, wherein
the configuration information of the relay apparatus comprises an identifier of at least one application and an identifier of a user corresponding to an identifier of each application in the identifier of the at least one application;
the identifier of the first application is one of the identifier of the at least one application, and the first user is one of an identifier of a user corresponding to the identifier of the first application; and
for each of the at least one application, the relay apparatus allows data of each user corresponding to the application to be transmitted through the relay apparatus.

6. The method according to claim 1, wherein the first indication information comprises a target relay service code; and
the relay apparatus determines that the data of the target application is allowed to be transmitted through the relay apparatus when determining that the following condition is met:
the target relay service code matches a first relay service code.

7. The method according to claim 6, wherein before the receiving, by a relay apparatus, a first message from a first terminal device, the method further comprises:
receiving, by the relay apparatus, configuration information of the relay apparatus from a network device, wherein
the configuration information of the relay apparatus comprises at least one relay service code;
the first relay service code is one of the at least one relay service code;
each of the at least one relay service code corresponds to an identifier of at least one application; and
the relay apparatus allows data of each of the at least one application corresponding to each of the at least one relay service code to be transmitted through the relay apparatus.

8. The method according to claim 7, wherein for an identifier of each application in the identifier of the at least one application corresponding to each of the at least one relay service code, the identifier of the application corresponds to an identifier of at least one user; and
for the identifier of each application in the identifier of the at least one application corresponding to each of the at least one relay service code, the relay apparatus allows data of each user in the identifier of the at least one user corresponding to the application to be transmitted through the relay apparatus.

9. The method according to claim 1, wherein after the receiving, by a relay apparatus, a first message from a first terminal device, the method further comprises:
sending, by the relay apparatus, a first request to a network device, wherein the first request comprises the identifier of the target application and an identifier of the relay apparatus; and the first request is used to request to verify whether the relay apparatus is allowed to transmit the data of the target application; and
receiving, by the relay apparatus, a first response returned by the network device, wherein
the first response is used to indicate that the relay apparatus is allowed to transmit the data of the target application, or the first response is used to indicate that the relay apparatus is not allowed to transmit the data of the target application.

10. The method according to claim 9, wherein the first request further comprises an identifier of a target user, and the target user is a user of the target application of the first terminal device;
the first request is used to request to verify whether the relay apparatus is allowed to transmit data of the target application corresponding to the target user; and
the first response is used to indicate that the relay apparatus is allowed to transmit the data of the target application corresponding to the target user, or the first response is used to indicate that the relay apparatus is not allowed to transmit the data of the target application corresponding to the target user.

11. A relay link establishment method, comprising:
generating, by a first apparatus, a first message, wherein the first message comprises first indication information and relay service indication information, the first indication information is used to indicate an identifier of a target application, and the relay service indication information is used to indicate to request to establish a relay link; and
sending, by the first apparatus, the first message.

12. A configuration information sending method, comprising:
generating, by a network device, configuration information of a relay apparatus according to a preset first rule; and
sending, by the network device, the configuration information of the relay apparatus to the relay apparatus, wherein
the configuration information of the relay apparatus comprises indication information used to indicate an identifier of at least one application; and
the relay apparatus allows data of each of the at least one application to be transmitted through the relay apparatus.

13. The method according to claim 12, wherein the configuration information of the relay apparatus comprises at least one relay service code;
each of the at least one relay service code corresponds to the identifier of the at least one application; and
the relay apparatus allows the data of each of the at least one application corresponding to each of the at least one relay service code to be transmitted through the relay apparatus.

14. A relay link establishment method, comprising:
receiving, by a first apparatus, configuration information of a target user, wherein the configuration information of the target user is used to indicate an identifier of at least one application;
comprising relay service indication information in a first message when a target application matches one of the at least one application; and/or comprising no relay service indication information in the first message when the target application does not match any of the at least one application, wherein the relay service indication information is used to that the first terminal to request to establish a relay link based on a relay apparatus; and
sending, by the first apparatus, the first message, wherein the first message is used to request to establish a proximity-based services link to a second terminal device.

15. A relay apparatus, comprising:
a transceiver, configured to receive a first message from a first terminal device, wherein the first message comprises first indication information and relay service indication information, the first indication information is used to indicate an identifier of a target application, and the relay service indication information is used to indicate to request to establish a relay link; and
a processor, configured to: send the first message when the relay apparatus determines that data of the target application is allowed to be transmitted through the relay apparatus; and/or stop sending the first message when the relay apparatus determines that the data of the target application is not allowed to be transmitted through the relay apparatus.

16. The relay apparatus according to claim 15, wherein the processor is specifically configured to:
allow the data of the target application to be transmitted through the relay apparatus when determining that the following condition is met:
the identifier of the target application matches an identifier of a first application.

17. The relay apparatus according to claim 16, wherein the transceiver is further configured to:
receive configuration information of the relay apparatus from a network device, wherein
the configuration information of the relay apparatus comprises an identifier of at least one application, and the identifier of the first application is one of the identifier of the at least one application; and the relay apparatus allows data of each of the at least one application to be transmitted through the relay apparatus.

18. The relay apparatus according to claim 15, wherein the first indication information is further used to indicate an identifier of a target user, and the target user is a user of the target application of the first terminal device; and
the processor is specifically configured to:
allow the data of the target application to be transmitted through the relay apparatus when determining that the following conditions are met:
the identifier of the target application matches an identifier of a first application; and
the identifier of the target user matches an identifier of a first user.

19. The relay apparatus according to claim 18, wherein the transceiver is further configured to:
receive configuration information of the relay apparatus from a network device, wherein
the configuration information of the relay apparatus comprises an identifier of at least one application and an identifier of a user corresponding to an identifier of each application in the identifier of the at least one application;
the identifier of the first application is one of the identifier of the at least one application, and the first user is one of an identifier of a user corresponding to the identifier of the first application; and
for each of the at least one application, the relay apparatus allows data of each user corresponding to the application to be transmitted through the relay apparatus.

20. The relay apparatus according to claim 15, wherein the first indication information comprises a target relay service code; and
the processor is specifically configured to:
allow the data of the target application to be transmitted through the relay apparatus when determining that the following condition is met:
the target relay service code matches a first relay service code.

21. The relay apparatus according to claim 20, wherein the transceiver is further configured to:
receive configuration information of the relay apparatus from a network device, wherein
the configuration information of the relay apparatus comprises at least one relay service code;
the first relay service code is one of the at least one relay service code;
each of the at least one relay service code corresponds to an identifier of at least one application; and
the relay apparatus allows data of each of the at least one application corresponding to each of the at least one relay service code to be transmitted through the relay apparatus.

22. The relay apparatus according to claim 21, wherein for an identifier of each application in the identifier of the at least one application corresponding to each of the at least one relay service code, the identifier of the application corresponds to an identifier of at least one user; and
for the identifier of each application in the identifier of the at least one application corresponding to each of the at least one relay service code, the relay apparatus allows data of each user in the identifier of the at least one user corresponding to the application to be transmitted through the relay apparatus.

23. The relay apparatus according to claim 15, wherein the transceiver is further configured to:
send a first request to a network device, wherein the first request comprises the identifier of the target application and an identifier of the relay apparatus; and the first request is used to request to verify whether the relay apparatus is allowed to transmit the data of the target application; and
receive a first response returned by the network device, wherein
the first response is used to indicate that the relay apparatus is allowed to transmit the data of the target application, or the first response is used to indicate that the relay apparatus is not allowed to transmit the data of the target application.

24. The relay apparatus according to claim 23, wherein the first request further comprises an identifier of a target user, and the target user is a user of the target application of the first terminal device;
the first request is used to request to verify whether the relay apparatus is allowed to transmit data of the target application corresponding to the target user; and
the first response is used to indicate that the relay apparatus is allowed to transmit the data of the target application corresponding to the target user, or the first response is used to indicate that the relay apparatus is not allowed to transmit the data of the target application corresponding to the target user.

25. An apparatus comprising:
a processor, configured to generate a first message, wherein the first message comprises first indication information and relay service indication information, the first indication information is used to indicate an identifier of a target application, and the relay service indication information is used to indicate to request to establish a relay link; and
a transceiver, configured to send the first message.

26. A network device, comprising:
a processor, configured to generate configuration information of a relay apparatus according to a preset first rule; and
a transceiver, configured to send the configuration information of the relay apparatus to the relay apparatus, wherein
the configuration information of the relay apparatus comprises indication information used to indicate an identifier of at least one application; and
the relay apparatus allows data of each of the at least one application to be transmitted through the relay apparatus.

27. The network device according to claim 26, wherein the configuration information of the relay apparatus comprises at least one relay service code;
each of the at least one relay service code corresponds the identifier of the at least one application; and
the relay apparatus allows the data of each of the at least one application corresponding to each of the at least one relay service code to be transmitted through the relay apparatus.

28. An apparatus comprising:
a transceiver, configured to: receive configuration information of a target user, wherein the configuration information of the target user is used to indicate an identifier of at least one application; and send a first message, wherein the first message is used to request to establish a proximity-based services link to a second terminal device; and
a processor, configured to: comprise relay service indication information in the first message when a target application matches one of the at least one application; and/or comprise no relay service indication information in the first message when the target application does not match any of the at least one application, wherein the relay service indication information is used to indicate the first terminal to request to establish a relay link based on a relay apparatus.

29. A communication apparatus, wherein the apparatus comprises a processor and a communication interface,
the communication interface is configured to input and/or output information; and
the processor is configured to execute a computer program, to perform the method according to any one of claims 1 to 14.

30. A computer-readable storage medium, wherein the computer-readable storage medium stores a computer-executable program; and when the computer-executable program is invoked by a computer, the computer is enabled to perform the method according to any one of claims 1 to 14.
